# EUROPÄISCHE PATENTSCHRIFT

(11) **EP 2 424 647 B1**
(45) Veröffentlichungstag und Bekanntmachung des Hinweises auf die Patenterteilung: **18.04.2018**
(21) Anmeldenummer: 10719303.9
(22) Anmeldetag: 26.04.2010
(51) Int. Cl.: B01D 61/14, B01J 23/38, B01J 23/44, B01J 21/18

(54) **VERFAHREN ZUR AUSSCHLEUSUNG UND KONDITIONIERUNG VON KATALYSATOREN MITTELS MEMBRANFILTRATION**
METHOD FOR DISCHARGE AND CONDITIONING OF CATALYSTS BY MEMBRANE FILTRATION
PROCÉDÉ DE EXFILTRATION ET CONDITIONNEMENT DE CATALYSEURS PAR FILTRATION SUR MEMBRANE

(30) Priorität: 29.04.2009 EP 09159041
(43) Veröffentlichungstag der Anmeldung: 07.03.2012
(73) Patentinhaber: BASF SE, 67056 Ludwigshafen am Rhein (DE)
(72) Erfinder: VOß, Hartwig, 67227 Frankenthal (DE); SCHWAB, Ekkehard, 67434 Neustadt (DE); HOFFER, Bram Willem, 4613 AS Bergen op Zoom (NL); GERLACH, Till, 67071 Ludwigshafen (DE)
(74) Vertreter: BASF IP Association
(86) Internationale Anmeldenummer: PCT/EP2010/055525
(87) Internationale Veröffentlichungsnummer: WO 2010/125025

(56) Entgegenhaltungen:
- EP-A1- 0 052 719
- EP-A1- 1 103 303
- WO-A2-2009/086107
- US-A- 5 215 667

## Beschreibung

Die vorliegende Erfindung betrifft ein Verfahren zur Konditionierung und Ausschleusung von suspendierten Katalysatoren, das dadurch gekennzeichnet ist, dass mindestens eine Teilmenge des Katalysatoren enthaltenden Reaktionsmediums aus einem oder mehreren Reaktoren entnommen wird und die suspendierten, mindestens teilweise inaktivierten Katalysatoren mittels mindestens einer Membranfiltration abgetrennt und gereinigt werden, wobei mindestens eine der Membranfiltrationen als Diafiltration ausgeführt wird.

Unter dem Terminus Konditionierung wird bei der vorliegenden Erfindung die Vorbereitung für eine stoffliche Wiederverwertung oder Entsorgung, insbesondere eine Reinigung, bzw. Reinigung und Aufkonzentrierung, verstanden.

Unter Verwendung der vorliegenden Erfindung kann der Katalysator in sehr einfacher Weise von dem Reaktionsmedium enthaltend gegebenenfalls toxische organische Lösemittel und/oder Reaktionsprodukte sowie Edukte getrennt werden. Ferner kann eine Aufkonzentrierung in das erfindungsgemäße Verfahren integriert werden. Demnach liegt der inaktivierte Katalysator nach Durchführung des erfindungsgemäßen Verfahrens bevorzugt in Wasser, in aufkonzentrierter Form und im Wesentlichen frei von organischen Verbindung vor, so dass ohne weitere Konditionierung eine stoffliche Wiederverwertung oder eine Entsorgung vorgenommen werden kann.

Das erfindungsgemäße Verfahren ist vielseitig einsetzbar und lässt sich für verschiedenste Katalysatortypen und Katalysatoren unterschiedlicher Partikelgröße verwenden, die in unterschiedlichen katalysatorgestützten Reaktionen eingesetzt werden können. Es versteht sich daher, dass die vorstehend genannten und die nachstehend noch zu erläuternden Merkmale des erfindungsgemäßen Verfahrens nicht nur in der jeweils angegebenen speziellen Kombination, sondern auch in anderen Kombinationen verwendbar sind, ohne den Rahmen der Erfindung zu verlassen.

Da die Erfindung ein Verfahren für die Konditionierung von suspendierten Katalysatoren beschreibt, soll sich im Folgenden der Begriff Katalysatoren auf suspendierte Katalysatoren beziehen.

Bekanntermaßen nimmt die Aktivität von Katalysatoren im Verlauf ihres Einsatzes, beispielsweise durch Alterung und Vergiftung, allmählich ab. Um ein konstantes Leistungsniveau der Reaktion halten zu können, wird in der Regel neuer Katalysator zugegeben. Dieser Vorgehensweise sind jedoch durch die fortschreitende Erhöhung des Katalysator- bzw. Feststoffgehalts in der Reaktionssuspension enge Grenzen gesetzt. Aus diesem Grunde muss in regelmäßigen Abständen eine kostspielige Unterbrechung der Reaktion durchgeführt werden, um die in der Regel ganz oder teilweise inaktivierten Katalysatoren teilweise oder vollständig auszutragen und durch frische Katalysatoren gleicher oder anderer Art zu ersetzt. Die inaktivierten Katalysatoren können anschließend entsorgt oder dazu verwendet werden einzelne Katalysatorbestandteile, insbesondere dessen Edelmetallanteil, stofflich wiederzuverwerten.

Dem Fachmann sind verschiedene Techniken bekannt, mit denen ein Katalysator vom Reaktionsmedium abgetrennt und gegebenenfalls aufkonzentriert und in die Synthese rückgeführt werden kann:
In WO 99/01206 wird beispielsweise ein Verfahren offenbart, dass suspendierte Katalysatoren mittels einer Querstromfiltration über einen keramischen Filter abtrennt. Der Aufbau von störenden Deckschichten an den Filtern wird durch eine hohe Überstromgeschwindigkeit verhindert.

In CN 1394672 A und CN 1377875 A wird aus einer chemischen Synthese Reaktionsmedium entnommen. Das Suspensionsmittel wird durch eine Querstromfiltration abgetrennt und der Katalysator mit dem restlichen Suspensionsmittel in den Reaktor rückgeführt. Hierdurch wird die in den Reaktor zurückgeführte Katalysatorsuspension langsam bis zu einer maximalen Konzentration von 12 Gew.-% der Katalysatorsuspension aufkonzentriert.

WO 91/16294 stellt ein Verfahren zur Katalysatorrückgewinnung bei der Herstellung von Ethercarbonsäuren durch katalytische Oxidation vor. Der Katalysator wird hierbei mittels einer Querstromfiltration auf bis zu 30 Gew.-% der Katalysatorsuspension aufkonzentriert und in den Reaktor rückgeführt. Es wird offenbart, dass ein bei der Oxidation verwendeter Lösevermittler die Filtration erleichtern kann, wobei als Lösevermittler Glykolether ohne Hydroxygruppen beschrieben wird.

WO 04/112957 befasst sich mit der Rückgewinnung eines homogenen, gegebenenfalls suspendierten, Katalysators durch Filtration über eine semipermeable Membran. Es wird beschrieben, dass monoolefinisch ungesättigte Verbindungen, die eine Komponente des Reaktionsmediums darstellen, als Hilfsstoff bei der Membrantrennung eingesetzt werden können.

JP 5-23680 stellt ein Verfahren zur photooxidativen Behandlung von Wasser vor, bei dem ein Titandioxyd-Katalysator mittels eines Filters innerhalb eines Reaktors gehalten wird. In dem Reaktor wird durchfließendes Wasser UV-Strahlung ausgesetzt. Die für die Filtration verwendete Reverse-Osmose-Membran wird in regelmäßigen Abständen durch einen Wasserrückstrom gereinigt. Es wird offenbart, mehrere dieser Reaktoren hintereinander einzusetzen.

In einer Veröffentlichung der mott-corporation, 84 Spring Lane, Farmington, USA vom April 1997, werden Membranfilter vorgestellt, die einzeln oder in paralleler Anordnung, zur Rückhaltung von Katalysatoren verwendet werden können. Die Katalysatoren werden im Reaktionsmedium aufkonzentriert und entweder in das Reaktionsmedium zurückgeführt oder während einer dead-end Filtration durch Rückspülen und Ausschleusen des Konzentrates aus der Anlage entfernt. Eine Möglichkeit zur kontinuierlichen Entnahme von Katalysatoren ist nur über wechselseitig verwendete Filter möglich. Eine weitere Behandlung bzw. Konditionierung von ausgeschleusten, verbrauchten Katalysatoren wird nicht beschrieben.

Die Entsorgung oder die stoffliche Wiederverwertung der ganz oder teilweise inaktivierten Katalysatoren wird in Abhängigkeit von deren Zusammensetzung vorgenommen. Katalysatorsuspensionen, die aufgrund der verbliebenen Menge an toxischen organischen Lösemitteln oder Reaktionsprodukten als gesundheits- oder umweltgefährdende Zubereitung eingestuft werden, müssen unter hohen Sicherheitsauflagen und demnach kostenintensiven Verfahren entsorgt oder recycelt werden. Bei einer Kennzeichnung als gesundheits- oder umweltgefährdende Zubereitung ist beispielsweise die Handhabung, der Transport und die Verbennung/Veraschung nur unter erheblichem Sicherheits- und/oder technischem Aufwand möglich.

Demnach besteht ein großes wirtschaftliches Interesse, dass die inaktivierten Katalysatorsuspensionen nur einen geringen Restgehalt an problematischen, organischen Verbindungen z. B. der jeweiligen organischen Edukte, Produkte oder Lösemitteln aufweisen. Eine Absenkung der Konzentration von sehr giftigen bzw. krebsauslösenden (K1+K2) Stoffen auf kleiner gleich 0,1 % erlaubt es sogar, eine Einstufung als gesundheits- oder umweltgefährdende Zubereitung gänzlich zu vermeiden (siehe Gefahrstoffverordnung, Zubereitungsrichtlinie 1999/45/EG). Aber auch eine Reduzierung des Restgehaltes an problematischen, organischen Verbindungen auf kleiner 1 % bewirkt z.B. eine Abstufung von T⁺ (sehr giftig) auf Xₙ (gesundheitsschädlich) und erleichtert damit die Handhabung.

Es besteht ferner ein beträchtliches Interesse, direkt bei der Entnahme der inaktivierten Katalysatoren aus dem jeweiligen Reaktoren diese in einem Zustand zu erhalten, in dem zum einen der Transport und zum anderen die stoffliche Wiederverwertung oder eine Entsorgung ohne weitere Konditionierungsschritte, bzw. ohne besondere Sicherheitsmaßnahmen, möglich ist. Insbesondere sollte der inaktivierte Katalysator frei von organischen Verbindungen sein und in einem nicht toxischen Lösemittel, bevorzugt Wasser, vorliegen. Ferner ist vorteilhaft, wenn der Katalysator in hoher Konzentration vorliegt.

Die zuvor beschriebenen Verfahren belassen den Katalysator in dem ihm ursprünglich umgebenden Reaktionsmedium. Somit wird nicht das Problem gelöst, den Katalysator von anhaftenden und evtl. gesundheitsschädlichen Komponenten des Reaktionsmediums beziehungsweise vom organischen Lösemittel zu befreien. Ferner kann es sich bei diesen Komponenten um Wertstoffe handeln, deren Abtrennung und Aufbereitung wirtschaftlich sinnvoll ist. Der Katalysator wird üblicherweise lediglich aufkonzentriert, aber in keiner Weise auf eine folgende Entsorgung oder Aufarbeitung vorbereitet, d.h. er wird nicht konditioniert. Weiterhin wird die aufkonzentrierte Katalysatorsuspension in den bisherigen Verfahren gängigerweise in ein Reservoir bzw. direkt in den Reaktor zurückgeführt und kann daher nicht isoliert werden. Hierdurch ist ein kontinuierlicher Reaktorbetrieb bei gleichzeitiger Katalysatorausschleusung und -konditionierung unmöglich. Gemäß der EP0052719 wird ein Metallkatalysator aus dem Produkt abgetrennt und für einen Wiedereinsatz konditioniert. Die Abtrennung erfolgt kontinuierlich oder diskontinuierlich. Auch die DE 100 57 891 offenbart eine Rückgewinnung und Wiederverwendung von heterogenene Katalysatoren mittels Membranverfahren und Lösungsmittelaustausch. Die Aufgabe der vorliegenden Erfindung bestand demnach darin, ein Verfahren zu entwickeln, mit dem Katalysatoren, die aus einer kontinuierlich betriebenen suspensionskatalysierten Reaktion in einer Teilmenge (Purge) abgezogen werden, möglichst vollständig vom Reaktionsmedium getrennt und in möglichst hoher Konzentration in einer flüssigen nicht-toxischen bzw. in Vergleich zum Reaktionsmedium weniger kritischen Phase zur Verfügung gestellt werden können. Das Verfahren sollte ferner flexibel einsetzbar und bezogen auf die Konditionierung sowohl diskontinuierlich als auch kontinuierlich zu verwenden sein. Insbesondere sollte das Verfahren einen kontinuierlichen Betrieb bei im Wesentlichen gleich bleibender Reaktorleistung, durch Entnahme einer Katalysator enthaltenden Teilmenge und Zugabe der jeweils benötigten Menge aktiven Katalysators, ermöglichen, so dass auf kostspielige Unterbrechungen zum Katalysatorwechsel verzichtet werden kann.

Überraschenderweise können mit Hilfe eines Verfahrens zur Konditionierung von suspendierten Katalysatoren die inaktivierten Katalysatoren in einem nicht-toxischen bzw. in Vergleich zum Reaktionsmedium weniger kritischen Lösemittel ohne nennenswerte Mengen verbleibender organischer Verbindungen aus der Reaktionsmedium bereitgestellt werden, wobei das Verfahren gemäß Anspruch 1 durchgeführt wird. Unter dem Terminus Diafiltration wird eine Membranfiltration verstanden, bei der vor oder während der Membranfiltration ein Diafiltrationsmedium zum Retentat gegeben wird. Das Diafiltrationsmedium besteht in der Regel aus einer flüssigen Phase, die von dem bisherigen Suspensionsmittel verschieden ist. Durch die Zugabe des Diafiltrationsmediums wird die Konzentration des Katalysators in der Regel nicht verändert. Bevorzugt wird das bisherige Suspensionsmittel durch ein anders geartetes Suspensionsmittel ausgetauscht. Bevorzugt ist das Diafiltriermedium ohne Phasengrenze mit dem bisherigen Suspensionsmittel mischbar. Besonders bevorzugt ist das Diafiltriermedium ohne Phasengrenze mit dem bisherigen Suspensionsmittel in jedem Verhältnis mischbar. Ohne Phasengrenze mischbar bedeutet hierbei, dass bei den jeweils vorliegenden Druck- und Temperaturbedingungen und den verwendeten Mischungsverhältnissen keine Phasengrenze, beispielsweise in Form einer Emulsion, entsteht.

Unter dem Terminus Retentat wird der Stoffstrom verstanden, der nicht durch die Membran hindurch tritt, unter dem Terminus Permeat der Stoffstrom, der durch die Membran hindurch tritt. Der hierdurch entstehende Stoffstrom pro Membranfläche wird als Permeatfluss bezeichnet und in der Regel in kg/m²/h angegeben. Entsprechend der Definition von Retentat und Permeat wird unter der Retentatseite die Seite der Membran verstanden, auf der sich die Katalysatorsuspension befindet und unter der Permeatseite entsprechend die Seite der Membran, auf das sich die im Wesentlichen katalysatorfreie flüssige Phase befindet.

Unter dem Terminus Konzentrationsschritt wird eine Filtration verstanden, nach der der Katalysator in einem kleineren Volumen Suspensionsmittel als vor der Filtration vorliegt. Beispielsweise kann der suspendierte Katalysator aufkonzentriert werden, indem das Suspensionsmittel teilweise über eine Membran entfernt wird und der suspendierte Katalysator in einem kleineren Volumen des Suspensionsmittels zurückbleibt.

Unter dem Terminus Membranfiltration werden die Mikrofiltration, die auch Querstromfiltration genannt wird, die Ultrafiltration oder die Nanofiltration verstanden.

Unter dem Terminus suspendierte Katalysatoren werden solche Katalysatoren verstanden, die als Feststoff in einer flüssigen Phase vorliegen. Die flüssige Phase kann aus einer reinen oder einer im Wesentlichen reinen Flüssigkeit oder einer Mischung von Flüssigkeiten bestehen. Die flüssige Phase kann beispielsweise im Falle einer katalysatorgestützten Reaktion die flüssigen Bestandteile des Reaktionsmediums wie Edukte, Produkte, Lösungsmittel oder auch Lösungsmittel und gelöste Edukt- und/oder Produktkomponenten umfassen. Die Zusammensetzung der flüssigen Phase ändert sich verfahrensbedingt im Verlauf des erfindungsgemäßen Verfahrens.

Unter dem Terminus Suspensionsmittel wird die flüssige Phase verstanden, in dem der suspendierte Katalysator vorliegt.

Unter dem Terminus Katalysatorsuspension wird die Gesamtheit aus dem Suspensionsmittel und dem darin suspendiertem Katalysator verstanden. Eventuell können neben dem Katalysator weitere Feststoffe in der Katalysatorsuspension vorhanden sein. Bevorzugterweise enthält die Katalysatorsuspension keine weiteren Feststoffe.

Erfindungsgemäß liegt der Katalysator, der mittels des erfindungsgemäßen Verfahrens konditioniert werden soll, zunächst suspendiert in einem flüssigen Reaktionsmedium vor. Durch die Durchführung einer oder mehrerer Diafiltrationsschritte erfolgt ein Austausch des Suspensionsmittels.

Der Fortschritt bzw. Grad des Austausches des Suspensionsmittels wird durch den Austauschkoeffizienten angegeben. Der Austauschkoeffizient ergibt sich aus der entnommenen Permeatmenge, beziehungsweise der zugeführten Menge an Diafiltrationsmedium (abgetrennte Permeatmenge und Menge an zugeführtem Diafiltrationsmedium sind im Falle der Diafiltration gleich), geteilt durch die Retentatmenge. Die Mengen können hierbei entweder einheitlich nach Volumen oder einheitlich nach Gewicht bestimmt werden. Das neu hinzukommende Diafiltrationsmedium kann in flüssiger oder fester Form zugegeben werden. In fester Form kann es beispielsweise in kristalliner oder im gefrorenen Zustand vorliegen und kann sich im Laufe des Verfahrens verflüssigen oder verflüssigt werden.

Der Katalysator liegt nach der Durchführung des erfindungsgemäßen Verfahrens, d.h. nach der letzten Filtration, in einem flüssigen Suspensionsmittel, ausgewählt aus der Gruppe bestehend aus Alkohole wie Methanol, Ethanol, iso-Propanol und Ethylenglycol, Ketone wie Aceton, Ether wie Dioxan, Nitrile wie Acetonitril, Säureamide wie Dimethylformamid und besonders bevorzugt in nicht toxischem Wasser vor. Ist das ursprüngliche Suspensionsmittel (Reaktionsmedium) nicht mit Wasser mischbar, muss dieses zuerst gegen ein Suspensionsmittel ausgetauscht werden, dass sowohl mit dem ursprünglichen Suspensionsmittel als auch mit Wasser mischbar ist, und dann dieses in einem weiteren Diafiltrationsschritt gegen Wasser ausgetauscht werden. Geeignet für diesen Zwischenschritt sind z.B. Alkohole wie Methanol, Ethanol, iso-Propanol und Ethylenglycol, Ketone wie Aceton, Ether wie Dioxan und Nitrile wie Acetonitril, Säureamide wie Dimethylformamid.

Das erfindungsgemäße Verfahren enthält demnach mindestens einen Diafiltrationsschritt. Soll der inaktivierte Katalysator am Ende der Konditionierung in Wasser vorliegen und ist das Reaktionsmedium nicht mit Wasser mischbar, werden bevorzugt 1 bis 3, insbesondere 1 bis 2 Diafiltrationen eingesetzt. Das erfindungsgemäße Verfahren enthält zusätzlich mindestens einen Konzentrationsschritt, bevorzugt zwei. Der erste Konzentrationsschritt erfolgt in der Regel vor dem ersten Diafiltrationsschritt. Dabei wird der Katalysator im Reaktionsmedium aufkonzentriert. Die Folge ist, dass in den folgenden Diafiltrationsschritten für die geforderte Abreicherung weniger Diafiltrationsmedium verbraucht bzw. Permeat erzeugt wird, als bei der direkten Diafiltration der nichtkonzentrierten Katalysatorsuspension. Der zweite Konzentrationsschritt erfolgt in der Regel nach dem letzten Diafiltrationsschritt. Hier erfolgt die Endkonzentrierung gegebenenfalls unter zur Hilfenahme eines oder mehrerer geeigneter Hilfsstoffe.

Während des Verfahrens können Diafiltrations- und Konzentrationsschritte in geeigneter Anzahl und Reihenfolge aneinandergereiht werden.

Die optimale Anzahl der Diafiltrations- und Konzentrationsschritte kann vom Fachmann für den jeweiligen Katalysator in Abhängigkeit von der Art und Menge der Verunreinigungen bestimmt werden.

Beispielsweise lassen sich die Diafiltrations- und Konzentrationsschritte wie folgt abschätzen:
Die Konzentrationen c, Mengen m sowie die MK- und MA-Werte beziehen sich auf die kontinuierliche fluide Phase (Suspensionsmittel) der Anteil an suspendiertem Katalysator wird nicht berücksichtigt. Die Rückhaltung R = 1 - (c_{Permeat}/c_{Retentat}) beträgt für die Komponenten des Suspensionsmittels, da diese die Membran in der Regel ungehindert passieren, gleich null (R = 0). Der Katalysator wird im Wesentlichen vollständig zurückgehalten (R = 1).
X(t) = Wert zur Zeit t; X(t = 0) = Wert zur Zeit t = 0

| | | |
|---|---|---|
| Konzentration: | c(t) = c(t = 0) x MK(t)^{R} | |
| | c(t) = c(t = 0) | [für R=0] |
| | MK(t) = m(t = 0)_{Retentat}/m(t)_{Retentat} | [Konzentrationsfaktor] |
| | Ausbeute_{Retentat} = MK(t)^{(R-1)} | |
| | Ausbeute_{Retentat} = MK(t)⁽⁻¹⁾ | [für R=0] |
| | | |
| Diafiltration: | c(t) = c(t = 0) x e^{-MA(t) x (1-R)} | |
| | c(t) = c(t = 0) x e^{-MA(t)} | [für R=0] |
| | MA(t) = m(t)_{Permeat}/m_{Retentat} | [Diafiltrationskoeffizient] |
| | m_{Retentat} = konstant, zeitunabhängig | |
| | Ausbeute_{Retentat} = e^{-MA(t)} x (1-R) | |
| | Ausbeute_{Retentat} = e^{-MA(t)} | [für R=0] |

In der Regel wird das in jeder Filtration entstehende Retentat zur nächsten Filtration weitergeleitet. Das aus jeder einzelnen Filtration erhaltene im Wesentlichen katalysatorfreie Permeat kann zur Rückgewinnung von beispielsweise Produkt, Suspensionsmittel, Diafiltriermedium und/oder Hilfsstoffen getrennt oder als gesammeltes Permeat aufgearbeitet werden. Die aus einzelnen Permeaten oder dem gesammelten Permeat rückgewonnenen Stoffe z.B. die Diafiltriermediem können entweder der Membranfiltrationsanlage an geeigneter Stelle erneut zugeführt oder anderweitig verwertet oder entsorgt werden. Selbstverständlich kann das Permeat auch ohne weitere Aufarbeitung verworfen werden.

Die Katalysatorsuspension weist vorteilhaft nach Durchführung des erfindungsgemäßen Verfahren eine Konzentration der problematischen Komponenten des Reaktionsmediums (Verunreinigungen wie beispielsweise Produkte, Edukte und/oder organische Lösemittel) von weniger als 1 Gew.-%, bezogen auf die Suspension, auf, bevorzugt weniger als 0,5 Gew.-% und insbesondere weniger als 0,1 Gew.-%.

Die Katalysatorsuspension weist vorteilhaft nach Durchführung des erfindungsgemäßen Verfahrens eine Katalysatorkonzentration von 1 bis 60 %, bezogen auf die Suspension, auf, bevorzugt 5 bis 50 % und insbesondere 10 bis 40 %.

Besonders bevorzugt liegt der inaktivierte Katalysator nach Durchführung des erfindungsgemäßen Verfahrens in wässriger Lösung vor.

Vorteilhaft wird das Membranfiltrationsverfahren in Abhängigkeit von der Partikelgröße des zu konditionierenden Katalysators als Mikrofiltration (Querstromfiltration), als Ultrafiltration oder als Nanofiltration durchgeführt.

Vorteilhaft werden inaktivierte Katalysatoren konditioniert. Inaktivierte Katalysatoren sind solche Katalysatoren, die im Mittelwert mindestens 0,5 %, bevorzugt mindestens 10 % ihrer katalytischen Eigenschaften verloren haben. Der Fachmann kann beispielsweise durch eine Wirtschaftlichkeitsbetrachtung ermitteln, ab welchem Grad an Inaktivierung eine Konditionierung durchzuführen wäre, beziehungsweise anhand des jeweiligen Katalysatorverbrauchs ermitteln, in welchem Maße eine kontinuierlichen Konditionierung durchzuführen ist. Typischerweise liegt der Katalysatorverbrauch zwischen 10 g bis 1000 g pro Tonne Produkt.

Das erfindungsgemäße Verfahren ist für die unterschiedlichsten suspendierbaren Katalysatorarten, -typen und -größen anwendbar. Die Größe des Katalysators kann in weiten Grenzen variieren. So können Katalysatoren verwendet werden, deren mittlere Partikeldurchmesser sehr klein sind, beispielsweise im Nanometerbereich. Auch können große Katalysatoren mit einem mittleren Partikeldurchmesser von beispielsweise bis zu 0,5 mm verwendet werden. Üblicherweise können mit dem erfindungsgemäßen Verfahren Katalysatoren mit einem Partikeldurchmesser von 1 nm bis 500 µm, bevorzugt 2 nm bis 100 µm und besonders bevorzugt 3 nm bis 50 µm konditioniert werden. Die Größenangabe der Partikeldurchmessers bezieht sich auf den so genannten d_{50.0}-Wert, der angibt, dass 50 % der Partikel kleiner und 50 % der Partikel größer als der genannte Wert sind. Liegen die Partikel in Aggregaten vor, so wird anstelle der Partikeldurchmessers der Durchmesser der Aggregate verwendet. Verfahren zur Bestimmung des d_{50.0}-Wertes sind dem Fachmann bekannt.

Die Aktivmasse des Katalysators enthält in der Regel eines oder mehrere Elemente der I. bis VIII. Nebengruppe des Periodensystems der Elemente nach IUPAC. Bevorzugt werden Kupfer, Chrom, Molybdän, Eisen, Nickel, Platin, Palladium, Mangan, Rhodium, Ruthenium, Cobalt, Iridium,Vanadium, Osmium, Silber, Zink, Cadmium, Wolfram oder eine Mischung dieser Elemente. Besonders bevorzugt sind Katalysatoren, die mindestens ein Element, ausgewählt aus Kupfer, Cobalt, Eisen, Nickel, Rhodium, Iridium, Ruthenium, Platin oder Palladium enthalten. Der Metallgehalt der Katalysatoren liegt in der Regel im Bereich von 0,1 bis 100 Gew.-%, vorzugsweise im Bereich von 0,2 bis 95 Gew.-%, besonders bevorzugt im Bereich von 0,5 bis 95 Gew.-% bezogen auf das Gesamtgewicht des Katalysators.

Die Aktivmasse des Katalysators enthält vorzugsweise zusätzlich mindestens ein Element, ausgewählt aus den Elementen der II., III., IV. und VI Hauptgruppe, der II., III., IV. und V. Nebengruppe des Periodensystems der Elemente und der Lanthaniden als Promotor zur Aktivitätssteigerung. Der Promotorgehalt des Katalysators beträgt in der Regel bis zu 5 Gew.-%, vorzugsweise im Bereich von 0,001 bis 5 Gew.-%, besonders bevorzugt im Bereich von 0,01 bis 3 Gew.-%. Der Promotorgehalt eines Katalysators wird mit einem Analyseverfahren bestimmt, welches durch die Art des verwendeten Promotors bestimmt wird.

Die Katalysatoren können zum Typ der Voll- oder Trägerkatalysatoren gehören. Bei den Vollkatalysatoren, die im Wesentlichen aus Aktivmasse bestehen, handelt es sich besonders bevorzugt um Katalysatoren des Raney®, Metallschwamm-, Metalloxid- bzw. Metalloxidhydrat-Typs. Beispiele solcher Katalysatoren sind Raney®-Nickel, Raney®-Kupfer, Raney®-Cobalt, Raney®-Nickel/Molybdän, Raney®-Nickel/Kupfer, Raney®-Nickel/Chrom, Raney®-Nickel/Chrom/Eisen, Eisenoxid, Cobaltoxid oder metallischer Rhodium-Schwamm. Bei Trägerkatalysatoren ist die Aktivmasse auf der Oberfläche massiver Trägerpartikel bzw. auf der Oberfläche und/oder im Inneren eines porösen Trägerpartikels abgeschieden. Beispiele sind z.B. mit Metallen wie Platin, Palladium, Nickel bzw. anderen Aktivmassen dotierte Katalysatortäger aus Oxidkeramiken oder Kohlenstoff.

Die Herstellung von Katalysatoren ist dem Fachmann bekannt und kann nach dem Fachmann bekannten Verfahren erfolgen.

Das erfindungsgemäße Verfahren kann zur Konditionierung von suspendierten Katalysatoren zwecks stofflicher Rückgewinnung eingesetzt werden, die in unterschiedlichsten katalysatorgestützten Reaktionen verwendet werden. In der folgenden Tabelle sind einige der Reaktionen, beispielsweise Hydrierungen, Oxidationen, Isomerisierungen und Hydroisomerisierungen, und den in den jeweiligen Reaktionen bevorzugt verwendeten Katalysatoren lediglich beispielhaft erwähnt.

| | |
|---|---|
| Beispielreaktion | Darin bevorzugt verwendete Katalysatoren |
| Hydrierungen von C-C Mehrfachbindungen | Edelmetalle auf Trägern wie Kohle oder Keramik, Raney®-Nickel |
| Hydrierungen von Nitroverbindungen zu Aminen | Edelmetalle auf Trägern wie Kohle oder Keramik, Raney®-Nickel bzw. Cobalt |
| Hydrierungen von Aromaten zu Cycloaliphaten | Ru, Rh auf Kohleträgern, Raney®-Nickel |
| Hydrierungen von Nitrilen zu Aminen | Ru auf Trägern wie Kohle und Raney®-Nickel bzw. Cobalt |
| Selektive Hydrierungen (in Gegenwart von Doppelbindungen) von Aldehyden zu Alkoholen | Edelmetalle wie Ru oder Pt auf Kohleträger |
| Selektive Hydrierungen von Alkinen zu Alkenen | Pd auf Kohleträger |
| Selektive Hydrierungen von olefinischen Doppelbindungen auch in Gegenwart von aromatischen Strukturen | Edelmetalle wie z. B. Pd auf Kohleträgern |
| Selektive Hydrierungen von Aromaten in Gegenwart von hydrierbaren funktionellen Gruppen wie z.B. Epoxid-Strukturen | Ru oder Rh auf Kohleträgern |
| Aminierende Hydrierungen von Carbonylfunktionen zu primären, sekundären und tertiären Aminen | Edelmetalle auf Trägern wie Kohle oder Keramik, Raney®-Nickel bzw. Cobalt |
| Oxidationen von Wasserstoff zu H₂O₂ | Pt und Pd auf keramischen Trägern |
| Oxidationen von primären Alkoholen zu Aldehyden, sekundären Alkoholen zu Ketonen | Pt, Pd oder Ru auf Kohlenstoff- bzw. Al₂O₃-Trägern |
| Oxidationen von primären Alkoholen zu Carbonsäuren | Pt oder Pd auf Kohlenstoff- bzw. Al₂O₃-Trägern |
| Isomerisierungen von Doppelbindungen | Zeolithe |
| Hydroisomerierungen von Doppelbindungen | vergiftete Hydrierkatalysatoren |

Das erfindungsgemäße Verfahren wird durchgeführt, indem die Gesamt- oder eine Teilmenge der Katalysatoren enthaltenden Reaktionsmediums kontinuierlich aus einem oder mehreren Reaktoren entnommen wird. Mögliche Reaktoren können beispielsweise Rührreaktoren, Schlaufenreaktoren, Blasensäulenreaktoren oder Abwandlungen oder Kombinationen von diesen sein.

Der Fachmann kann die optimale Größe der zu entnehmenden Teilmenge beispielsweise anhand des Katalysatorverbrauchs pro Tonne Produkt und anhand einer Wirtschaftlichkeitsbetrachtung bestimmen.

Die entnommene Katalysatorsuspension kann nach ihrer Entnahme in einer mit einem Reaktor fest verbundenen oder zumindest zeitweise fest verbundenen Membranfiltrationsanlage filtriert werden. Die Membranfiltrationsanlage kann aus lediglich einem Filtrationsanlagenelement bestehen oder aus mehreren Filtrationsanlagenelementen zusammengesetzt sein, enthält aber mindestens einen Membranfilter. Sie verläuft in der Regel von einem oder mehreren Reaktoren bis zum Entnahmepunkt des konditionierten Katalysators.

Die gewählte Anzahl und Art der Filtrationsanlagenelemente kann von einem Fachmann den jeweiligen Notwendigkeiten angepasst werden. Hierdurch sind komplex aufgebaute Membranfiltrationsanlagen möglich. Bevorzugt sind einfache und daher kostengünstige Membranfiltrationsanlagen. Unter Filtrationsanlagenelementen versteht man jedes abtrennbare Teil der Membranfiltrationsanlage, dass eine Funktion in der Membranfiltrationsanlage erfüllt. Die einzelnen Filtrationsanlagenelemente bestehen beispielsweise aus Rohr- und/oder Schlauchverbindungen, Dichtungen, Druck- und Temperaturmessern und -reglern, Pumpen, Ventilen, Filtern sowie Zu- und Ableitungen. Eine entsprechende Membranfiltrationsanlage kann ein, einige oder alle der beispielhaft genannten Elemente in Ein- oder Mehrzahl und in geeigneter Ausführungsform und Reihenfolge beinhalten. Die Membranfiltrationsanlage kann auch parallele Leitungen, Filter und Filtrationswege enthalten, die gleichzeitig oder wechselseitig betrieben werden können.

Die verwendeten Membranfilter bestehen aus einem Filtergehäuse, welches bei den jeweiligen Bedingungen der Filtration stabil ist. Solche Bedingungen sind beispielsweise Druck, Temperatur oder die Art und Zusammensetzung der Katalysatorsuspension. Ein Filtergehäuse kann eine oder mehrere Membranen enthalten. Ein Filtergehäuse ist ein Behältnis, welches eine oder mehrere Membranen in geeigneter Orientierung enthält und zumindest zeitweise fest mit einem oder mehreren anderen Filtrationsanlagenelementen verbunden werden kann. Die Membran kann mit dem Filtergehäuse fest verbunden oder herausnehmbar gestaltet sein. Die Membran kann eine Flach-, Scheiben-, Rohr-, Kapillar- oder Wickelgeometrie haben. Je nach Flächenbedarf kann ein Filter mehrere Membranen in paralleler oder aufeinander folgender Anordnung enthalten. In einer bevorzugten Ausführungsform wird eine keramische Membran, die bevorzugt mit Elastomerdichtungen in einem Filtergehäuse aus Metall eingesetzt ist oder eine Membran aus Metall, die bevorzugt mit den Filtergehäuse fest verbunden ist, verwendet. Bevorzugt hat die keramische Membran eine Rohr- oder Mehrkanalgeometrie und die Membran aus Metall eine Rohrgeometrie.

Eine Membran besteht in der Regel aus lediglich einer Trennschicht (homogene selbsttragende Membran) oder aus einer Trennschicht und mindestens einer Unterstruktur (Mehrschicht-Komposit-Membran). Die Verwendung einer dünnen mechanisch nicht stabilen Trennschicht auf einer ein- oder mehrschichtigen porösen Unterstruktur erhöht im Allgemeinen den Permeatfluss und stellt die mechanische Belastbarkeit der Membran sicher. Diese Unterstruktur kann aus dem gleichen oder auch aus mindestens einem unterschiedlichen Material wie die Trennschicht bestehen. Sie ist im Allgemeinen grobporiger als die Trennschicht.

Mögliche Material-Kombinationen von Trennschicht und Unterstruktur können beispielsweise sein: Metall-Metall, Keramik-Metall, Keramik-Keramik, Keramik-Kohlenstoff, Polymer-Polymer, Polymer-Metall, Polymer-Keramik, Polymer-Keramik auf Metall, Kohlenstoff-Kohlenstoff, Kohlenstoff-Metall, Kohlenstoff-Keramik. Auch homogene, selbsttragende Membranen auf Basis von Polymeren, Kohlenstoff, Keramik oder Metall sind einsetzbar.

Als organische Trennschicht- und/oder Unterstruktur-Materialien können beispielsweise Polytetrafluoroethylene, Polyvinylidenfluoride, Polyethylen, Polypropylen, Polysulfone, Polyethersulfone, Polyetherketone, Polyamide, Polyester, Polyacrylnitrile, Regeneratcellulosen, Silikone, Polyimide oder funktionell gleichwertige Materialen verwendet werden.

Beispiele für anorganische Trennschicht- und/oder Unterstruktur-Materialien sind: α-Al₂O₃, γ-Al₂O₃, ZrO₂, TiO₂, SiC, gemischte keramische Werkstoffe, Edelstahl, Nickel, Metalllegierungen und Kohlenstoff. Beispiele sind (MF = Mikrofiltrationsmembran, UF = Ultrafiltrationsmembran, NF = Nanofiltrationsmembran):

| Hersteller | Membran | Trenngrenze (kD) Porendurchmesser (nm oder µm) |
|---|---|---|
| Atech innovations GmbH. | UF / TiO₂ auf α-Al₂O₃ / 1, 2 | 20 kD |
| | UF / TiO₂ oder ZrO₂ auf α-Al₂O₃ / 1, 2 | 50 nm |
| | MF / α-Al₂O₃ auf α-Al₂O₃ / 1, 2 | 0,1; 0,2; 0,4; 0,8; 1,2 µm |
| Rhodia / Orelis | MF / ZrO₂ oder TiO₂ auf Keramik / 1, 2 | 0,1; 0,2; 0,45; 0,8 µm |
| | UF / ZrO₂ oder TiO₂ auf Keramik / 1, 2 | 15, 50, 150; 300 kD |
| | UF / ZrO₂-TiO₂ auf Kohlenstoff / 1 | 50; 150; 300 kD |
| | MF / ZrO₂-TiO₂ auf Kohlenstoff / 1 | 0,14 µm |
| Graver Technologies | UF / TiO₂ auf Stahl / 1 | 100 nm |
| GKN Sinter Metals | MF / Metall auf Metall / 1, 3 | 0,3 - 1 µm |
| Microdyn NADIR GmbH. | UF / Polyethersulfon oder Polysulfon/ 3 | 10 - 150 kD |
| | UF / Polyethersulfon / 1 | 40, 100 kD |
| | MF / Polyethylen oder Polypropylen selbstragend ohne Unterstruktur / 1 | 0,2 und 1 µm |
| Creavis | UF / ZrO₂ auf α-Al₂O₃ und Metall / 3 | 25, 80 nm |
| GE-Osmonics | UF / Polysulfon / 3 | 40 nm |
| | UF/PVDF/3 | 10 kD |
| | MF/PVDF/3 | 300 nm |
| Pall Schumacher | UF / TiO₂ oder ZrO₂ auf Keramik / 1, 2 | 5,10 und 50 nm |
| | MF / α-Al₂O₃ auf Keramik / 1, 2 | 100 und 200 nm |
| Inocermic | NF / TiO₂ auf Keramik / 1, 2 | 0,9 nm |
| | UF / ZrO₂ auf Keramik / 1, 2 | 3 nm |
| Saint-Gobain | MF / SiC auf SiC / 1, 2 (SiC = rekristallisiertes SiC) | 250, 500, 800, 1500, 3000 nm |
| 1: Rohrmembran; 2: Mehrkanalelement; 3: Flachmembran für Wickel-, Taschen-, Plattenstapel- oder Sondermodule mit bewegter Membran bzw. Rühraggregaten zwischen den Membranen | | |

Der Porendurchmesser der Trennschicht richtet sich im Allgemeinen hauptsächlich nach der jeweiligen Größe der kleinsten Katalysatorpartikel. Bei Wahl einer geeigneten Porengröße der Trennschicht können Katalysatorverluste durch Trüblauf vernachlässigt werden. Als Trüblauf werden Katalysatorpartikel bezeichnet, die bei einer schlecht gewählten Porengröße der Trennschicht durch die Membran hindurchtreten können und daher im Permeat zu finden sind. Dieser Trüblauf und eine damit einhergehende Verblockung des Filtriermediums tritt verstärkt beim Einsatz von klassischen Filtrationsverfahren zur Feststoffabscheidung z.B. mit Filterpressen, Drucknutschen, Filterkerzen, Zentrifugen und Scheibenfiltern sowie zur Feststoffkonzentrierung z.B. mit Separatoren, Zentrifugen und Dekantern auf. Dieses Problem ist insbesondere evident bei Katalysatorpartikeln mit einem D_{50.0} < 50 µm, da die Katalysatorpartikel in technischen Reaktoren üblicherweise klein gerieben werden und Partikelanteile mit ein Durchmesser von deutlich unter 1 µm entstehen und natürlich bei sehr feinteiligen Katalysatoren mit einem D_{50.0} < 1 µm. Idealerweise werden diese Katalysatorverluste bei Einsatz von Membranen mit angepassten Porenweiten vollständig vermieden.

Abhängig von der Größenverteilung der Katalysatorpartikel weisen die verwendeten Trennschichten vorzugsweise Porendurchmesser im Bereich von 0,5 nm bis 10 µm, insbesondere im Bereich von 1 nm bis 5 µm und vorzugsweise im Bereich von 2 nm bis 2 µm auf. Vorteilhafterweise sollte die Porengröße der Trennschicht kleiner sein, als die Größe der kleinsten Katalysatorpartikel. Falls die Katalysatorpartikel aggregiert vorliegen, richtet sich die bevorzugte Porengröße nicht nach der Größe der kleinsten Katalysatorpartikel, sondern nach der Größe der kleinsten Aggregate. Die Angabe der Porengröße der Trennschicht bezieht sich in der Regel auf den Durchmesser, bei dem 90 % der Poren kleiner als die angegebene Porengröße sind. Die Trennschicht der Membran ist die Schicht der Membran, die die kleinsten Poren der Membran enthält. Die Porengröße beziehungsweise die Trenngrenze der Membranen werden mit dem Fachmann bekannten Verfahren bestimmt.

Bei der Wahl der Membran müssen, neben der Porengröße der Trennschicht und der Größenverteilung der Katalysatorpartikel, die Filtrationsbedingungen wie die Zusammensetzung des Suspensionsmittels bzw. der flüssigen Phase, die Druckverhältnisse, die Temperatur und eventuell vorhandene Hilfsstoffe beachtet werden. Vorteilhafterweise darf eine geeignete Membran ihre Trenneigenschaften d.h. ihre Trenngrenze unter keiner der beispielhaft genannten Faktoren wesentlich verändern.

Die Trenngrenze in kD bezeichnet das Molekulargewicht einer gelösten Testsubstanz, die eine Rückhaltung (R) von 90% aufweist. R ist hierbei 1 minus der Konzentration im Permetat, geteilt durch die Konzentration im Retentat.

Die Korrelation zwischen Trenngrenze in kD und dem Porendurchmesser ist dem Fachmann bekannt. So werden beispielsweise Porengrößen von 2,0 bis 1,2 µm für Molekulargewichte von größer als 1000 kD, Porengrößen von 0,6 µm für 1000 kD, 0,2 µm für 400 kD, 0,1 µm für 200 kD, 0,05 µm für 100 kD, 0,01 µm für 20 kD und 0,05 µm für 10 kD verwendet.

Im erfindungsgemäßen Verfahren können die Bedingungen der Filtration wie Druck, Temperatur oder Strömungsgeschwindigkeit bei Bedarf unabhängig von den Bedingungen im Reaktionssystem gewählt werden. Durch diese Unabhängigkeit können die Bedingungen für die jeweilige Filtration optimiert werden. Es kann beispielsweise die Temperatur und/oder der Druck erhöht oder erniedrigt werden, die Strömungsgeschwindigkeit optimal gewählt, das Suspensionsmittel ausgetauscht und/oder die Eigenschaften und Zusammensetzung des Retentates und/oder Permeates durch Zugabe von Hilfsstoffen optimiert werden. Dem Fachmann ist es möglich die jeweils optimalen Bedingungen der Filtration zu wählen. Weitere Unterstützung hierfür findet er in der Fachliteratur.

Die Filtration kann bei unterschiedlichen Drücken vorgenommen werden und für jede Filtration des Verfahrens individuell gewählt und optimiert werden. Somit können sie gleich oder verschieden von den Drücken während einer vorhergehenden oder nachfolgenden Filtration sein und können sich für jede Filtration des Verfahrens auch während der Filtration ändern oder geändert werden.

Während einer Filtration herrschen in einem Filter im Allgemeinen unterschiedliche Drücke, die unterschiedlich bezeichnet werden. Mit dem Permeatdruck ist der Druck auf der Seite des Permeats der Membran und mit dem Retentatdruck ist der Druck auf der Seite des Retentats der Membran gemeint. Die Filtration kann bei einem Retentatdruck in einem Bereich von 1 bis 100 bar, vorzugsweise in einem Bereich von 1 bis 50 bar durchgeführt werden. Der Transmembrandruck ist das retentatseitige arithmetrische Mittel aus den Drücken am Einlauf des Filters und am Auslaufs des Filters, reduziert um den Permeatdruck. Er kann ebenfalls für jede Filtration optimiert werden und gleich oder verschieden von dem Transmembrandruck in anderen Filtrationen des Verfahrens sein. Der Transmembrandruck kann beispielsweise im Bereich von mindestens 0,1 bar, insbesondere im Bereich von 0,2 bis 50 bar und vorzugsweise im Bereich von 0,5 bis 25 bar liegen. Die zu wählenden Druckverhältnisse sind im Wesentlichen abhängig von der Art der Membran, vom Durchmesser der Poren der Membran, der Katalysatorkonzentration, den hydrodynamischen Bedingungen im Membranmodul sowie der mechanischen Stabilität aller Filtrationsanlagenelemente. Höhere Transmembrandrücke führen in der Regel zu höheren Permeatflüssen. Der erforderliche Druck kann durch Pumpen und/oder durch Gravitation erzeugt werden.

Die Temperatur kann für jede Filtration, die im Verlauf des erfindungsgemäßen Verfahrens vorgenommen wird, unabhängig gewählt und optimiert werden. Höhere Temperaturen führen in der Regel zu höheren Permeatflüssen. Sie kann folglich gleich oder verschieden von der Temperatur in dem vorhergehenden und/oder nachfolgenden Filtrationsschritt sein. Sie richtet sich hauptsächlich nach den Löslichkeitsverhältnissen und den Schmelz- und Siedepunkten der jeweils vorhandenen Stoffe unter den jeweils vorhandenen Druckbedingungen. Es können Temperaturen im Bereich von 0 bis 200 °C vorteilhaft im Bereich von 10 bis 180 °C bevorzugt im Bereich von 20 bis 150 °C und besonders bevorzugt im Bereich von 30 bis 120 °C gewählt werden.

Bei einer Filtration werden die Bedingungen bevorzugt so eingestellt, dass sich nur eine dünne oder keine merkliche Deckschicht auf der Membran ausbildet. Deckschichten bestehen aus festem Material oder einem Gel, das sich auf und/oder in der Membran ablagert und die Filtration negativ beeinflussen kann. Dieses Material kann jedes feste Material oder Gel sein, dass sich in der Katalysatorsuspension befindet. Beispielsweise kann es aus dem Katalysator bestehen. Gelartige Ablagerungen bilden sich z.B. aus hochmolekularen gelösten Komponenten, die von der Membran zurückgehalten werden und so auf der Membran akkumuliert werden können. Zur Verhinderung von Deckschichten können im Falle von Filtern und Membranen mit Flachmembran- beziehungsweise Scheibengeometrie auch Rühr- und/oder Scherelemente und/oder Bewegungen der Membran oder des Filters beispielsweise mittels Rotations- oder Vibrationsmodulen verwendet werden.
Weiterhin kann eine hohe Strömungsgeschwindigkeit der Katalysatorsuspension und einer damit einhergehenden Scherung an der Membranoberfläche verwendet werden. In der Regel wird eine Strömungsgeschwindigkeit im Bereich von 0,2 bis 20 m/s gewählt. Die geeignete Strömungsgeschwindigkeit ist abhängig von dem verwendeten Filter und der verwendeten Membran.
Filter und Membranen mit Wickelgeometrie werden bevorzugt mit einer Strömungsgeschwindigkeit im Bereich von 0,2 bis 2 m/s verwendet. Filter und Membranen mit einer Rohrgeometrie mit einer bevorzugten Strömungsgeschwindigkeit im Bereich von 1 bis 6 m/s. Rotationsfilter werden bevorzugt mit einer Strömungsgeschwindigkeit im Bereich von 5 bis 20 m/s eingesetzt.
Werden mehrere eventuell unterschiedliche Filter verwendet, so kann die Strömungsgeschwindigkeit an den jeweiligen Filter angepasst werden.
Der Fachmann verfügt über geeignete Hilfsmittel um die Strömungsgeschwindigkeiten zu messen und zu kontrollieren. Um Deckschichten zu entfernen erlaubt das erfindungsgemäße Verfahren auch eine Strömungsumkehr, die durch Anheben des Permeatdrucks über den Retentatdruck bewirkt werden kann (Permeatrückspülung).
Die vorgestellten Maßnahmen zur Verminderung beziehungsweise zur Verhinderung von Deckschichten können einzeln, in Kombination oder alternativ verwendet werden. Deckschichten können in jedem Filter der Membranfiltrationsanlage durch gleiche oder unterschiedliche Maßnahmen beziehungsweise gleiche oder unterschiedliche Kombinationen von Maßnahmen beeinflusst werden.

Eine weitere bevorzugte Ausführungsform des erfindungsgemäßen Verfahrens stellt die Zugabe eines oder mehrerer geeigneter Hilfsstoffe dar. Unter dem Begriff Hilfsstoff werden alle festen, flüssigen oder gasförmigen Stoffe verstanden, die der Katalysatorsuspension vor oder während der Filtration zugesetzt werden und geeignet sind die Filtration positiv zu beeinflussen. Die Filtration kann beispielsweise durch eine Erniedrigung der Viskosität günstig beeinflusst werden. Ebenso können ein Hilfsstoff oder mehrere Hilfsstoffe zur Stabilisierung der Katalysatorsuspension verwendet werden. Eine Stabilisierung der Katalysatorsuspension kann sich hierbei auf physikalische Parameter, wie die Sinkgeschwindigkeit der Katalysatorpartikel und/oder auf chemische Parameter, wie den pH-Wert beziehen. Durch den erfindungsgemäßen Einsatz von mindestens einem Hilfsstoff können beispielsweise höhere Endkonzentrationen des Katalysators im Retentat erreicht werden. Unter der Endkonzentration des Katalysators ist die Katalysatorkonzentration zu verstehen, bei der unter den gewählten Filtrationsbedingungen keine weitere Steigerung der Katalysatorkonzentration im Retentat mehr möglich ist.

Insbesondere bei höheren Katalysatorkonzentrationen auf der Retentatseite ist es möglich, durch die Verwendung von einem oder mehreren Hilfsstoffen höhere spezifische Permeatflüsse als ohne die Verwendung des oder der Hilfsstoffe zu erreichen. Bei der Verwendung eines oder mehrerer Hilfsstoffe bei niedrigen Katalysatorkonzentrationen im Retentat ist es möglich, dass niedrigere Permeatflüsse als ohne die Verwendung des Hilfsstoffs oder der Hilfsstoffe auftreten. Die Katalysatorkonzentration im Retentat, ab der bei Verwendung des Hilfsstoffs oder der Hilfsstoffe höhere Permeatflüsse als ohne Verwendung des Hilfsstoffs oder der Hilfsstoffe erreicht werden, wird Grenzkonzentration genannt.

Ebenso können ein oder mehrere Hilfsstoffe verwendet werden, um Ablagerungen innerhalb der Membranfiltrationsanlage zu verhindern und somit die Wartungsintervalle und die Lebensdauer der Membranfiltrationsanlage zu verlängern. Solche Ablagerungen können beispielsweise aus einzelnen Stoffen oder Gemischen von Stoffen bestehen oder aus ursprünglich vorhandenen Bestandteilen der Katalysatorsuspension wie Reaktionsprodukten, -edukten, oder anorganischen Salzen bestehen. Sie können auch im Laufe des Verfahrens entstehen beziehungsweise zugegeben werden.

Vorteilhaft wird mindestens eine Filtration in Gegenwart mindestens eines Hilfsstoffes ausgewählt aus der Gruppe bestehend aus Tensiden, Netz- und/oder Dispergiermitteln durchgeführt. Prinzipiell geeignet sind ionische und nichtionische molekulare und polymere Verbindungen, die die Filtrationseigenschaften von suspendierten Katalysatoren günstig beeinflussen.

Geeignete Hilfsstoffe sind beispielsweise nichtionische molekulare beziehungsweise polymere Tenside oder Dispergiermittel wie ethoxylierte Fettalkohole, Polyethylenglycol-Polypropylenglycol-Blockpolymere, deren Eigenschaften über die Größe der Polyethylenglycol, beziehungsweise Polypropylenglycolblöcke eingestellt werden können.

Weiterhin geeignet sind ionische molekulare bzw. polymere Tenside bzw. Netzmittel oder Dispergiermittel die beispielsweise Carboxyl-, Sulfon-, Phosphonsäuregruppen, quarternäre Ammoniumgruppen tragen. Hierzu zählen z.B.: C₁₂-C₁₈ Alkylsulfonsäure bzw. deren Salze, Alkylbenzol- bzw. Alkylnaphthalinsulfonsäuren bzw. deren Salze z.B. Dodecylbenzolsulfonsäure.

Polycarbonsäuren beziehungsweise deren Salze auf Basis von mindestens einer α,β-ungesättigten Carbonsäure, beispielsweise Acrylsäure, Methacrylsäure, Dimethacrylsäure, Ethacrylsäure, Maleinsäure, Citraconsäure, Methylenmalonsäure, Crotonsäure, Isocrotonsäure, Fumarsäure, Mesaconsäure und Itaconsäure. Vorzugsweise werden Polyacrylate auf Basis von Acrylsäure, Methacrylsäure, Maleinsäure oder deren Mischungen verwendet. Weitere geeignete copolymerisierbare Verbindungen sind N-Vinylcaprolactam, N-Vinylimidazol, N-Vinyl-2-methylimidazol, N-Vinyl-4-methylimidazol, Vinylacetat, Vinylpropionat, Isobuten oder Styrol.

Weiterhin geeignet sind Polyvinylphosphonsäuren und polymere Amine auf Basis von verseiftem Polyvinylformamid oder Ethylenimin. Weitere geeignete copolymerisierbare Verbindungen sind N-Vinylcaprolactam, N-Vinylimidazol, N-Vinyl-2-methylimidazol, N-Vinyl-4-methylimidazol, Vinylacetat, Vinylpropionat, Isobuten oder Styrol.

Beispiele geeigneter Hilfsstoffe sind:

**PEG = Polyethylenglycol, PPG = Polypropylenglycol**

| Stoff | mittleres Molekulargewicht | Handelsname der BASF Aktiengesellschaft |
|---|---|---|
| Naphthalinsulfonsäure-Formaldehyd-Kondensat-Na-Salz | 20 kD | Tamol® NH 7519 |
| Maleinsäure-Olefin-Copolymer-Na-Salz | 12 kD | Sokalan® CP 9 |
| modifizierte Polyacrylsäure-Na-Salz | 4 kD | Sokalan® CP 10 |
| Bockcopolymer (10 % PEG): PEG-PPG-PEG | 2 kD | Pluronic® 6100 |
| Bockcopolymer (50 % PEG): PEG-PPG-PEG | 6,5 kD | Pluronic® 10500 |
| Bockcopolymer (80 % PEG): PEG-PPG-PEG | 8 kD | Pluronic® 6800 |

Geeignete Hilfsstoff Konzentrationen, bezogen auf den Katalysator, liegen im Bereich von 0,1 bis 50 Gew.-%, bevorzugt von 0,2 bis 40 Gew.-%, besonders bevorzugt von 0,25 bis 30 Gew.-% und insbesondere von 0,5 bis 20 Gew.-%.

Die Art und Konzentration geeigneter Hilfsstoffe hängt von den jeweiligen Bedingungen ab und muss für jede Filtration optimiert werden. Informationen über die Eigenschaften in Betracht kommender Hilfsstoffe sind dem Fachmann bekannt oder über entsprechende Datenbanken und/oder Fachliteratur zugänglich.

Nach einer Ausführungsform sind für kohlegeträgerte Katalysatoren (z.B. Edelmetall auf Norit® SX) in Wasser die Tensid- beziehungsweise Dispergiermittel Tamol® NH 7519, Sokalan® CP 9 und Puronic® 6100 bevorzugt. Bei anderen Trägerkatalysatoren, beispielsweise auf Basis von Oxidkeramiken, oder Vollkatalysatoren, wie Raney®-Ni, oder bei anderen Lösungsmitteln als Wasser können andere Tenside beziehungsweise Dispergiermittel vorteilhaft sein.

Demnach betrifft die vorliegende Erfindung auch eine Verwendung von Tensiden, Netz- und/oder Dispergiermitteln in der Konditionierung von suspendierten Katalysatoren, insbesondere zur Erniedrigung der Viskosität, Stabilisierung der Katalysatorsuspension und/oder Verhinderung von Ablagerung innerhalb der Membranfiltrationsanlage, mit dem Vorteil, dass deutlich höhere Endkonzentrationen erreicht werden können. Bevorzugt ist somit ihr Einsatz in der letzten Filtrationsstufe z.B. bei der Endkonzentrierung.

Das erfindungsgemäße Verfahren kann kontinuierlich oder diskontinuierlich betrieben Bei diskontinuierlichem Betrieb wird die aus dem Reaktionssystem entnommene Katalysatorsuspension in einen Behälter gegeben, der als Kreislaufbehälter in einem Pumpkreis fungiert, in dem ein oder mehrere Filter integriert sind. Die Katalysatorsuspension kann im Kreis gepumpt, Permeat abgezogen und gegebenenfalls flüssige oder feste Stoffe wie Hilfsstoffe oder Suspensionsmittel an geeigneter Stelle des Pumpkreislaufes zudosiert werden. Hierfür geeignete Stellen sind beispielsweise Leitungen oder Behälter vor Filtern aber auch die Filter selber. Die Katalysatorsuspension wird solange in dem Pumpreislauf geführt, bis die gewünschte Konzentration des Katalysators und/oder die gewünschte Zusammensetzung des Suspensionsmittels erreicht ist. So kann beispielsweise die Katalysatorkonzentration verändert werden, indem flüssige Bestandteile durch Filtration entfernt oder indem ein Teil oder alle Bestandteile des Suspensionsmittels in gleicher oder anderer Zusammensetzung hinzugegeben werden. Weiterhin können qualitative Veränderungen erzeugt werden, indem beispielsweise durch Zugabe eines oder mehrerer Hilfsstoffe, die chemischen oder physikalischen Eigenschaften der Katalysatorsuspension, wie pH-Wert oder Viskosität, verändert werden. Weiterhin können Parameter wie Temperatur oder Druck verändert werden. Diese Veränderungen können jeweils alleine oder in Kombination durchgeführt werden.

Bei der kontinuierlichen Durchführung wird die aus dem Reaktionssystem entnommene Katalysatorsuspension in einem einmaligen Durchgang durch beziehungsweise entlang eines oder mehrerer Filter der Membranfiltrationsanlage geführt. Hierbei können alle oben beispielhaft genannten Maßnahmen zur Veränderung der Konzentration des Katalysators oder der Konzentration oder der Eigenschaften der Katalysatorsuspension allein oder in Kombination verwendet werden. Die Katalysatorentnahme erfolgt aus einem oder mehreren kontinuierlich betriebenen Reaktoren. Zusammengefasst kann nach der letzten Filtration der konditionierte verbrauchte Katalysator als Katalysatorsuspension, bevorzugt einer wässrigen Katalysatorsuspension, besonders bevorzugt als Katalysatorsuspension im Wesentlichen bestehend aus Katalysator und Wasser sowie gegebenenfalls zugesetztem Dispergiermittel bzw. Tensid, der Membranfiltrationsanlage entnommen und entweder direkt oder nach Trocknung aufgearbeitet und/oder entsorgt werden.
Durch die vorliegenden Erfindung wird demnach ein einfaches und kostengünstiges Verfahren zum Konditionieren und Ausschleusen von verbrauchten suspendierten insbesondere feinteiligen Katalysatoren zur Verfügung gestellt, das vielseitig bei allen kontinuierlich geführten suspensionskatalysierten Reaktionen einsetzbar ist.

Das erfindungsgemäße Verfahren ist insbesondere dann vorteilhaft, wenn der oder die Filter, welche den Katalysator im Reaktionssystem zurückhalten und ein idealerweise katalysatorfreies Filtrat generieren, Membranfilter, wie Mikro-, Querstrom-, Ultra- oder Nanofilter, sind, die bevorzugt in der Lage sind besonders feinteilige Katalysatoren oder auch zerkleinerte Katalysatorfraktionen mit beispielsweise Katalysatorpartikeln mit einem D_{50.0} < 5 µm, die sich in entsprechenden Reaktoren bilden können, zurückzuhalten.

Im Vergleich zu bestehenden Verfahren der Katalysatorauschleusung liegt ein Vorteil der Erfindung insbesondere darin, dass die Filtrationsbedingungen unabhängig von den Bedingungen im Reaktor gewählt und für eine effiziente Konditionierung optimiert werden können. Dies betrifft sowohl Parameter wie Katalysatorkonzentration, Diafiltriermedium, Druck, Strömung und Temperatur, als auch Parameter wie Membranmaterial, Membranfläche, Oberflächenspannung oder Ionenstärke der Katalysatorsuspenion, des Retentats und/oder des Permeats. Bei optimaler Wahl der Verfahrensparameter können im erfindungsgemäßen Verfahren kleinere Filtereinheiten als in herkömmlichen Verfahren verwendet werden, was die resultierenden Kosten für die Anschaffung und den regelmäßigen Ersatz der Filtereinheiten senkt. Das Verfahren erlaubt weiterhin eine im Wesentlichen verlustfreie Konditionierung verbrauchter Katalysatoren. Ebenso kann die Membranfiltrationsanlage beispielsweise an einen Reaktor angeschlossen werden und ermöglicht hierdurch die kontinuierliche oder diskontinuierliche Entnahme von ganz oder teilweise inaktiviertem Katalysator aus dem Reaktor. Dies ermöglicht es einen Reaktor mit gleichbleibender oder annähernd gleichbleibender Leistung kontinuierlich zu betreiben und somit kostspielige Unterbrechungen der Reaktion zu vermeiden.

Durch das Element der Diafiltration ist es möglich den Katalysator in hoher Reinheit in jedem gewünschten Suspensionsmittel, der Membranfiltrationsanlage zu entnehmen. Wenn ein für die Gesundheit von Mensch und Tier und für die Umwelt unbedenkliches Suspensionsmittel gewählt wird, kann hierdurch der Umgang mit dem Katalysator erleichtert und der Katalysator für eine folgende stofflichen Aufarbeitung oder Entsorgung vorbereitet werden.

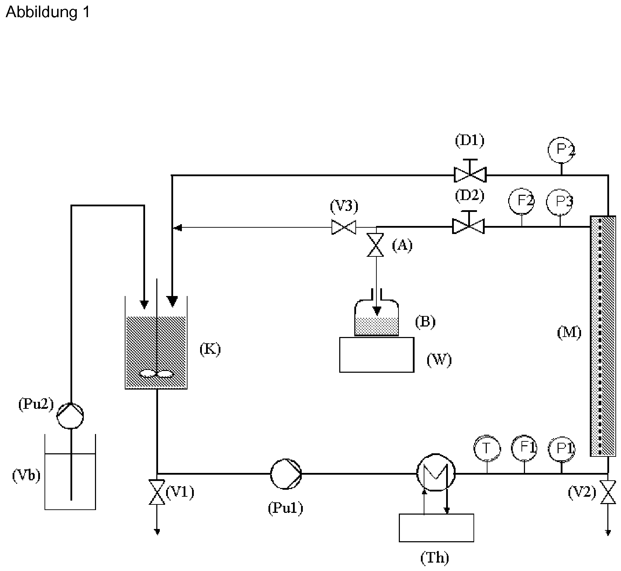

### Beschreibung der Abbildung 1:

Abbildung 1 zeigt die Skizze einer Filteranlage. Die Filteranlage enthält einen Pumpkreislauf, der einen Kreislaufbehälter (K), eine Pumpe (Pu1), einen Thermostat (Th), einen Membranfilter (M), Ventile (V1, V2, V3) sowie Druckhalteventile (D1, D2). Vor dem Membranfilter ist eine Temperatur- (T), eine Durchfluss- (F1) und eine Druckmesseinrichtung (P1) integriert. Zusätzlich zu dem Pumpkreislauf enthält die Filteranlage einen Vorratsbehälter (Vb) für das Diafiltriermedium, welches über eine Pumpe (Pu2) in den Kreislaufbehälter (K) dosiert werden kann. Der Druck des Retentats nach dem Membranfilter wird über eine Druckmesseinrichtung (P2) gemessen und über ein wird über eine Druckmesseinrichtung (P3) gemessen und über ein Druckhalteventil (D2) reguliert. Der Permeatfluss nach dem Membranfilter (M) wird durch eine Durchflussmesseinrichtung (F2) gemessen. Anfallendes Permeat kann über einen Permeat abgang (A) in einen Permeatbehälter (B) abgeleitet und mittels einer Waage (W) gewogen werden.

### Beispiele:

Für die Beispiele zur Konditionierung von Katalysatorsuspensionen mittels Membranfiltration wurde eine Filteranlage eingesetzt, die in Abbildung 1 skizziert ist.
In der Membranfiltrationsanlage kamen unterschiedliche Membranfilter zum Einsatz. Zum Beispiel wurden Membranfilter mit keramischen Einkanalrohren (Außendurchmesser = 10 mm, Innendurchmesser = 6 - 7 mm, Länge = 1000 mm) unterschiedlicher Trenngrenze verwendet. Die mittlere Strömungsgeschwindigkeit der Katalysatorsuspension im Membranfilter wurde auf 1 bis 6 m/s, der Transmembrandruck auf 0,5 bis 4 bar und die Temperatur je nach Filtration auf 40 bis 90°C eingestellt. Generell wurde die Katalysatorsuspension in den Kreislauf eingefüllt und die Membranfiltrationsanlage mit geschlossenem Permeatabgang (A) in Betrieb genommen. Sollte die Katalysatorkonzentration aufkonzentriert werden, wurde der Membranfiltrationsanlage Permeat über den Permeatabgang (A) entnommen. Bei der Diafiltration wurde der Membranfiltrationsanlage Permeat entnommen und entsprechend der abgetrennten Menge des Permeats Diafiltriermedium zugeführt. Optional wurden Hilfsstoffe, beispielsweise ein Tensid bzw. Netzmittel oder Dispergiermittel zur Katalysatorsuspension gegeben.

Die in den Beispielen angegebenen Gewichtsprozente (Gew.-%) sind auf das Gesamtgewicht der Katalysatorsuspension bezogen, falls nicht anders angegeben.

### Beispiel 1

Ein Reaktionsmedium aus einer suspensionskatalysierten Doppelbindungshydrierung (Hydrierung von 3-[4-t-Butylphenyl)-2-methylpropenal zu 3-[4-t-Butylphenyl)-2-methyl propanal) mit ca. 3 Gew.-% suspendiertem Katalysator (Pd auf Kohleträger), ca. 50 Gew.-% Hydrierprodukt und ca. 47 Gew.-% Methanol wurde einem dreistufigen Konzentrations- und Diafiltrationsprozess unterzogen. Hierzu wurde das oben beschriebene Reaktionsmedium bei 40°C, einem Transmembrandruck von 1 bar und einer Strömungsgeschwindigkeit von 4 m/s einer Filtration an einem Al₂O₃ Membran der Firma Atech Innovations mit 100 nm Porendurchmesser unterzogen.

In dem ersten Schritt wurde der Katalysator mit einem mittleren Permeatfluss von ca. 60 kg/m²/h im Reaktionsmedium von ca. 3 auf ca. 20 Gew.-% aufkonzentriert. In dem zweiten Schritt erfolgte bei konstanter Katalysatorkonzentration der Austausch des Reaktionsmediums gegen Methanol mit einem Austauschkoeffizienten von 3. In dem dritten Schritt erfolgte, bei ebenfalls konstanter Katalysatorkonzentration, der Austausch des Methanols gegen Wasser mit einem Austauschkoeffizienten von 3. Erhalten wurde eine Katalysatorsuspension in Wasser mit einer Katalysatorkonzentration von 20 Gew.-% und einer Produktkonzentration von ca. 0,2 Gew.-%. Die in den drei Schritten gemessenen Permeatflüsse sind den folgenden Tabellen zu entnehmen.

### Schritt 1 (Aufkonzentration):

bei 1 bar und 40 °C

| Konzentrat. Gew.% | Permeatfluss [kg/h*m²] |
|---|---|
| 2,8 | 86 |
| 8,3 | 72 |
| 9,3 | 70 |
| 17,7 | 68 |
| 15,8 | 65 |
| 20,0 | 63 |
| 20,2 | 23 |

### Schritt 2 (Diafiltration mit Methanol):

bei 1 bar, 40 °C und einer Katalysatorkonzentration von ca. 20 Gew.-%

| Austauschkoeffizient | Permeatfluss [kg/h*m²] |
|---|---|
| 0,0 | 23 |
| 0,2 | 28 |
| 0,6 | 51 |
| 1,5 | 87 |
| 2,3 | 151 |
| 2,9 | 189 |
| 3,0 | 190 |

### Schritt 3 (Diafiltration mit Wasser):

Bei 1 bar, 40 °C und einer Katalysatorkonzentration von ca. 20 Gew-%

| Austauschkoeffizient | Permeatfluss [kg/h*m²] |
|---|---|
| 0,0 | 190 |
| 0,1 | 58 |
| 1,3 | 81 |
| 1,6 | 130 |
| 2,5 | 166 |
| 3,8 | 174 |

### Beispiel 2:

Ein Reaktionsmedium aus einer suspensionskatalysierten Hydrierung eines Aldehyds zum Alkokol (Hydrierung von Citral zu Geraniol/Nerol) mit ca. 6 Gew.-% suspendiertem Katalysator (Ru auf Kohleträger), ca. 70 Gew.-% Hydrierprodukt, ca. 6 Gew.-% gelöster Hilfsbase und ca. 18 Gew.-% Methanol (Lösungsmittel) wurde einem zweistufigen Diafiltrationsprozess unterzogen. Hierzu wurde das oben beschriebene Reaktionsmedium bei 60°C, einem Transmembrandruck von 1 bar und einer Strömungsgeschwindigkeit von 4 m/s einer Filtration an einem Al₂O₃ Membran der Firma Atech Innovations mit 100 nm Porendurchmesser unterzogen.

Zuerst erfolgte bei konstanter Katalysatorkonzentration der Austausch des Reaktionsmediums gegen Methanol mit einem Austauschkoeffizienten von 3. Dabei stieg der Permeatfluss von ca. 80 auf ca. 240 kg/m²/h an und die Produktkonzentration bezogen auf die Suspension sank von ca. 70 auf ca. 2,9 Gew.-% ab. Hiernach erfolgte bei konstanter Katalysatorkonzentration der Austausch des Methanols gegen Wasser, ebenfalls mit einem Austauschkoeffizienten von 3. Dabei stieg der Permeatfluss von ca. 240 auf ca. 460 kg/m²/h an und die Produktkonzentration bezogen auf die Suspension sank von ca. 2,9 auf ca. 0,1 Gew.-% ab. Erhalten wurde eine ca. 6 Gew.-%ige Katalysatorsuspension in Wasser, die nur noch ca. 0,1 Gew.-% Produktkonzentration enthielt.

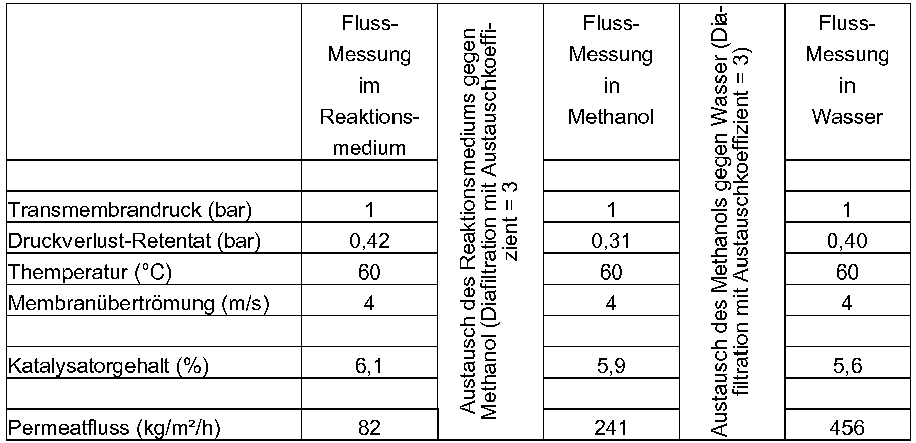

### Beispiel 3:

In dem Membranfiltrationsverfahren wurde ein Reaktionsmedium aus einer suspensionskatalysierten Hydrierung eines Nitroaromaten (Hydrierung von Dinitrotoluol zu Diaminotoluol) mit ca. 5 Gew.-% suspendiertem Katalysator (Ni auf ZrO₂-Träger), ca. 60 Gew.-% Hydrierprodukt und ca. 35 Gew.-% Wasser eingesetzt. Hierzu wurde das oben beschriebene Reaktionsmedium bei 80°C, einem Transmembrandruck von 1 bar und einer Strömungsgeschwindigkeit von 4 m/s einer Filtration an einem Al₂O₃ Membran der Firma Atech Innovations mit 100 nm Porendurchmesser unterzogen.

Zuerst erfolgte bei konstanter Katalysatorkonzentration der Austausch des Reaktionsmediums gegen Wasser, mit einem Austauschkoeffizienten von 5. Dabei stieg der Permeatfluss von ca. 190 auf ca. 680 kg/m²/h an und die Produktkonzentration bezogen auf die Suspension sank von ca. 60 auf ca. 0,3 Gew.-% ab.
Danach wurde der Katalysator von ca. 5 auf ca. 30 Gew.-% aufkonzentriert. Dabei sank der Permeatfluss von ca. 680 auf ca. 180 kg/m²/h ab. Erhalten wurde eine ca. 30 Gew.-%ige wässrige Katalysatorsuspension, die nur noch ca. 0,3 Gew.-% Reaktionsprodukt enthielt.

### Schritt 1 (Diafiltration):

| Austauschkoeffizient | Permeatfluss (kg/m²/h) |
|---|---|
| 0,0 | 190 |
| 0,5 | 330 |
| 1,1 | 470 |
| 1,9 | 595 |
| 2,2 | 600 |
| 3,2 | 650 |
| 4,1 | 660 |
| 5,0 | 675 |

### Schritt 2 (Konzentrierung in Wasser):

| Katalysatorkonzentration (Gew-%) | Permeatfluss (kg/m²/h) |
|---|---|
| 5,4 | 680 |
| 7,8 | 600 |
| 9,5 | 500 |
| 16,2 | 380 |
| 22,3 | 290 |
| 26,4 | 200 |
| 29,1 | 190 |

### Beispiel 4:

Ein Reaktionsmedium aus einer suspensionskatalysierten Hydrierung eines Nitrils (Hydrierung von Adipodinitril zu Hexamethylendiamin) mit ca. 25 Gew.-% suspendiertem Katalysator (Raney®-Ni) und ca. 75 Gew.-% Hydrierprodukt wurde einem zweistufigen Diafiltrations- und Konzentrationsprozess unterzogen. Hierzu wurde das Reaktionsmedium bei 60°C, einem Transmembrandruck von 1,5 bar und einer Strömungsgeschwindigkeit von 4 m/s einer Filtration an einem Al₂O₃ Membran der Firma Atech Innovations mit 100 nm Porendurchmesser unterzogen.

In dem ersten Schritt erfolgte bei konstanter Katalysatorkonzentration der Austausch des Reaktionsmediums gegen Wasser mit einem Austauschkoeffizienten von 5. Dabei stieg der Permeatfluss von 60 auf 1600 kg/m²/h an und die Produktkonzentration bezogen auf die Suspension sank von ca. 75 auf ca. 0,1 Gew.-% ab. In einem zweiten Schritt wurde der Katalysator von ca. 25 auf ca. 40 Gew.-% aufkonzentriert. Dabei sank der Permeatfluss von 1600 auf 1200 kg/m²/h ab. Erhalten wurde eine ca. 40 Gew.-%ige Katalysatorsuspension in Wasser, die nur noch ca. 0,1 Gew.-% Hydrierprodukt enthielt.

### Beispiel 5:

Durch Messung der Viskosität kann die Eignung unterschiedlicher Hilfsstoffe in Kombination mit unterschiedlichen Katalysatortypen und unterschiedlichen Suspensionsmedien bestimmt werden. Hierbei zeigt eine Abnahme der Viskosität bei Zugabe des zu testenden Hilfsstoffes zur Katalysatorsuspension eine hohe Eignung des Hilfsstoffs an.

Die Viskosität in Abhängigkeit von der Konzentration des Hilfsstoffs wurde bei einer 17 Gew.-%igen Norit SX-Wasser-Suspensionen und einer Temperatur von 40 °C gemessen. Norit SX ist ein typischer Kohlenstoffträger für Edelmetallkatalysatoren und ist daher geeignet einen Katalysator zu simulieren. Das verwendete Norit SX hatte einem mittleren Durchmesser von ca. 50 µm. Die Menge an Norit SX in der Suspension wurde auf 17 Gew-%, bezogen auf das Gesamtgewicht der Suspension, eingestellt.

Als Hilfsstoff wurden folgende Produkte der BASF Aktiengesellschaft verwendet:

| | |
|---|---|
| Tamol® NH 7519 | (Naphthalinsulfonsäure-Formaldehyd-Kondensat-Na-Salz), |
| Sokalan® CP 9 | (Maleinsäure-Olefin-Copolymer-Na-Salz), |
| Sokalan® CP 10 | (modifizierte Polyacrylsäure-Na-Salz), |
| Pluronic® 6100 | (Blockpolymer mit 10% PEG: PEG-PPG-PEG) |
| Pluronic® 10500 | (Blockpolymer mit 50% PEG: PEG-PPG-PEG) |
| Pluronic® 6800. | (Blockpolymer mit 80% PEG: PEG-PPG-PEG) |

| | |
|---|---|
| PEG = Polyethylenglykol, PPG = Polypropylenglycol | |

Die Viskosität wurde mit einem Viscotester VT01 der Firma Hacke bestimmt.

| Einwaage | | Pluronic® 6100 | | |
|---|---|---|---|---|
| Norit SX [g] | Wasser [g] | Einwaage [g] | pro kg Norit SX [g/kg] | Viskosität, [mPa*s] |
| 80,0 | 390,6 | 0,00 | 0,0 | 23,0 |
| 80,0 | 390,4 | 0,14 | 1,8 | 20,6 |
| 80,0 | 390,1 | 0,54 | 6,7 | 19,9 |
| 80,0 | 389,0 | 1,54 | 19,3 | 18,4 |
| 80,0 | 388,9 | 1,65 | 20,7 | 17,2 |
| 80,0 | 388,1 | 2,50 | 31,3 | 16,2 |
| 80,0 | 386,9 | 3,66 | 45,7 | 15,6 |
| 80,0 | 386,9 | 3,64 | 45,6 | 15,2 |
| 80,0 | 385,8 | 4,80 | 60,0 | 12,5 |
| 80,0 | 384,6 | 5,98 | 74,7 | 7,1 |
| 80,0 | 383,6 | 6,99 | 87,4 | 6,5 |
| 80,0 | 382,3 | 8,31 | 103,9 | 5,7 |

| Einwaage | | Pluronic® 6800 | | |
|---|---|---|---|---|
| Norit SX [g] | Wasser [g] | Einwaage [g] | pro kg Norit SX [g/kg] | Viskosität [mPa*s] |
| 80,0 | 390,6 | 0,00 | 0,0 | 23,0 |
| 80,0 | 390,2 | 0,39 | 4,9 | 21,5 |
| 80,0 | 389,9 | 0,67 | 8,4 | 20,2 |
| 80,0 | 389,0 | 1,59 | 19,9 | 19,0 |
| 80,0 | 387,0 | 3,56 | 44,5 | 17,0 |
| 80,0 | 383,9 | 6,64 | 83,0 | 15,2 |
| 80,0 | 378,0 | 12,54 | 156,8 | 12,0 |
| 80,0 | 367,4 | 23,24 | 290,5 | 8,1 |
| 80,0 | 356,3 | 34,31 | 428,9 | 6,0 |

| Einwaage | | Pluronic® 10500 | | |
|---|---|---|---|---|
| Norit SX [g] | Wasser [g] | Einwaage [g] | pro kg Norit SX [g/kg] | Viskosität, [mPa*s] |
| 80,0 | 390,6 | 0,00 | 0,0 | 23,0 |
| 80,0 | 386,9 | 3,70 | 46,3 | 16,0 |
| 80,0 | 385,4 | 5,22 | 65,2 | 14,2 |
| 80,0 | 384,0 | 6,60 | 82,5 | 13,4 |
| 80,0 | 381,7 | 8,88 | 111,0 | 11,2 |
| 80,0 | 376,0 | 14,60 | 182,5 | 6,1 |
| 80,0 | 371,0 | 19,64 | 245,5 | 4,0 |

| Einwaage | | Sokalan® CP 9 | | |
|---|---|---|---|---|
| Norit SX [g] | Wasser [g] | Einwaage [g] | pro kg Norit SX [g/kg] | Viskosität [mPa*s] |
| 80,0 | 390,6 | 0,00 | 0,0 | 23,0 |
| 80,0 | 389,0 | 1,61 | 20,2 | 10,0 |
| 80,0 | 387,9 | 2,67 | 33,3 | 8,0 |
| 80,0 | 387,2 | 3,40 | 42,4 | 7,0 |
| 80,0 | 385,6 | 4,97 | 62,1 | 6,5 |
| 80,0 | 382,3 | 8,32 | 104,0 | 6,0 |
| 80,0 | 375,2 | 15,43 | 192,9 | 5,5 |

| Einwaage | | Sokolan® CP 10 | | |
|---|---|---|---|---|
| Norit SX [g] | Wasser [g] | Einwaage [g] | pro kg Norit SX [g/kg] | Viskosität [mPa*s] |
| 80,0 | 390,6 | 0,00 | 0,0 | 23,0 |
| 80,0 | 389,8 | 0,78 | 9,7 | 19,0 |
| 80,0 | 389,2 | 1,43 | 17,9 | 18,5 |
| 80,0 | 386,6 | 3,94 | 49,3 | 18,1 |
| 80,0 | 380,8 | 9,82 | 122,8 | 18,0 |
| 80,0 | 368,6 | 22,00 | 275,0 | 17,5 |
| 80,0 | 348,2 | 42,42 | 530,2 | 15,5 |

| Einwaage | | Tamol® NH 7519 | | |
|---|---|---|---|---|
| Norit SX [g] | Wasser [g] | Einwaage [g] | pro kg Norit SX [g/kg] | Viskosität, [mPa*s] |
| 80,0 | 390,6 | 0,00 | 0,0 | 23,0 |
| 80,0 | 389,9 | 0,66 | 8,2 | 7,2 |
| 80,0 | 389,7 | 0,88 | 11,0 | 6,1 |
| 80,0 | 389,3 | 1,31 | 16,4 | 5,5 |
| 80,0 | 388,4 | 2,22 | 27,8 | 4,5 |
| 80,0 | 386,2 | 4,38 | 54,7 | 4,0 |

Die zweite Messung zeigt die Abhängigkeit der Viskosität von Norit SX-Wasser-Suspensionen, mit und ohne Tamol® NH 7519-Zugabe, in Abängigkeit von der Norit SX-Konzentration. Hierbei wurde das Verhältnis von Tamol® NH 7519 zu Norit SX, gemessen in g Tamol® NH 7519 pro kg Norit SX, auf 55 eingestellt.

Die Viskosität wurde mit einem Viscotester VT01 der Firma Hacke bestimmt.

| Einwaage Norit SX [g] | Einwaage Wasser [g] | Konzentration Norit SX [Gew-%] | Viskosität in [m Pa*s] |
|---|---|---|---|
| 19,0 | 381,0 | 4,8 | 1,2 |
| 36,4 | 363,6 | 9,1 | 3,3 |
| 52,2 | 347,8 | 13,0 | 9,1 |
| 66,7 | 333,3 | 16,7 | 27,9 |
| 80,8 | 320,0 | 20,0 | 130 |

| Einwaage Norit SX [g] | Einwaage Wasser [g] | Einwaage NH 7519 [g] | Konzentration Norit SX [Gew-%] | Tamol® NH 7519 [g/kg] | Viskosität in [m Pa*s] |
|---|---|---|---|---|---|
| 19,0 | 379,9 | 1,05 | 4,8 | 55 | 1,2 |
| 68,0 | 328,3 | 3,74 | 17,0 | 55 | 4,1 |
| 80,0 | 315,6 | 4,40 | 20,0 | 55 | 13,5 |
| 88,0 | 307,2 | 4,84 | 22,0 | 55 | 24,0 |

Bei einer Menge von 20 Gew.-% Norit SX, bezogen auf das Gesamtgewicht der Suspension, erniedrigt der Zusatz die Viskosität von 130 auf 13,5 m Pa*s d.h. ca. um den Faktor 10.

### Beispiel 6:

Es wurde eine 5 Gew.-%ige Norit SX Katalysatorträger-Suspension in Wasser mit und ohne Tensidzugabe aufkonzentriert. Als Tensid wurde Tamol® NH 7519 (Produkt der BASF Aktiengesellschaft) verwendet. Das verwendete Norit SX hatte zunächst einen mittleren Durchmesser von ca. 50 µm und wurde, um die Zerkleinerung in einem technischen Reaktor zu simulieren, in wässriger Suspension mittels eines Labor-Zahnkranzdispergierers (Ultra-Turrax) auf einen mittleren Durchmesser von ca. 5 µm zerkleinert. Die Membranfiltration wurde bei 60°C, einem Transmembrandruck von 1 bar und einer Strömungsgeschwindigkeit von 4 m/s an einer ZrO₂ Membran der Firma Atech Innovations mit 50 nm Porendurchmesser durchgeführt. Ohne Zugabe wurde eine Endkonzentration von ca. 20 Gew.-% erreicht. Bei dieser Konzentration zeigte sich, dass die Katalysatorsuspension nicht mehr stabil zu filtrierten war. D.h. die Dicke der Deckschicht auf der Membran nahm mit der Zeit zu und führte letztendlich zur kompletten Blockade der Membran. Durch die Tensidzugabe von 60 bzw. 120 g Tensid/kg Norit SX, konnte die erreichbare Katalysatorendkonzentration von ca. 20 Gew.-% auf ca. 32 bzw. 37 Gew.-% gesteigert werden. Oberhalb einer Norit SX-Grenzkonzentration von ca. 17 bzw. ca. 11 Gew.-% bei einer Hilfsstoffzugabe von 60 bzw. 120 g Tamol® NH 7519/kg Norit SX konnten im Vergleich zur tensidfreien Suspension zum Teil deutlich höhere Permeatflüsse erreicht werden. Zum Beispiel wurde bei einer 20 Gew.-%igen Katalysatorsuspension durch Zugabe von120 g Tamol® NH 7519/kg Norit SX, der Permeatfluss von ca. 60 auf ca. 300 kg/m²/h gesteigert.

0 g Tamol® NH 7519/kg Norit SX

| Permeatfluss | Norit SX plus(vorgescheert) ohne Tamol® NH 7519 |
|---|---|
| [kg/h*m²] | [%] |
| 899 | 4,8 |
| 632 | 8,7 |
| 348 | 13,5 |
| 262 | 16,1 |
| 180 | 18,1 |
| 60 | 20,0 |

60 g Tamol® NH 7519/kg Norit SX

| Permeatfluss | Norit SX plus(vorgescheert) mit 6% Tamol® NH 7519 |
|---|---|
| [kg/h*m²] | [%] |
| 314 | 5,4 |
| 278 | 10,9 |
| 252 | 13,2 |
| 142 | 23,3 |
| 43 | 30,5 |
| 12 | 31,7 |

120 g Tamol® NH 7519/kg Norit SX

| Permeatfluss | Norit SX plus(vorgescheert) mit 12% Tamol® NH 7519 |
|---|---|
| [kg/h*m²] | [%] |
| 355 | 18,2 |
| 257 | 22,2 |
| 150 | 26,7 |
| 112 | 30,8 |
| 16 | 36,4 |

### Beispiel 7:

In einem vierstufigen Konzentrations- und Diafiltrationsprozess wurde das lösungsmittelfreie Reaktionsmedium aus einer suspensionskatalysierten Doppelbindungshydrierung (Hydrierung von Pseudojonon zu Tetrahydrogeranylaceton), die 2 Gew.-% Katalysator (Pd auf einem Kohleträger) enthielt, aufkonzentriert und konditioniert. Als Membran wurde eine TiO₂-Membran der Firma Atech Innovations mit 50 nm Porendurchmesser verwendet. Die Membranfiltration erfolgte bei 60°C, einem Transmembrandruck von 1 bar und einer Strömungsgeschwindigkeit von 4 m/s.
In dem ersten Schritt wurde der Katalysator von 2 auf 12 Gew.-% aufkonzentriert. Dabei sankt der anfängliche Permeatfluss von ca. 160 auf 55 kg/m²/h. In dem zweiten Schritt erfolgte bei konstanter Katalysatorkonzentration und einem Permeatfluss beim Start des zweiten Schrittes von 55 kg/m²/h und einem Permeatfluss von 120 kg/m²/h am Ende des zweiten Schrittes, der Austausch des Reaktionsmediums gegen Isopropanol mit einem Austauschkoeffizienten von 3. In dem dritten Schritt wurde, bei konstanter Katalysatorkonzentration und einem Austauschkoeffizienten von 3, das Isopropanol durch Wasser ersetzt. Beim Start des dritten Schrittes wurde ein Permeatfluss von 120 kg/m²/h und am Ende des dritten Schrittes ein Permeatfluss von 180 kg/m²/h erhalten. Erhalten wurde eine ca. 12 Gew.-%ige Katalysatorsuspension in Wasser, die in einem vierten Schritt von ca. 12 auf 15 Gew.-% mit einem Permeatfluss von 180 kg/m²/h beim Start und einem Permeatfluss von 55 kg/m²/h am Ende des vierten Schrittes aufkonzentriert wurde.

| | Schritt 1 Konzentrierung | Schritt 2 Diafitration (Isopropanol) | Schritt 3 Diafitration (Wasser) | Schritt 4 Konzentrierung |
|---|---|---|---|---|
| Permeatfluss (kg/m²/h) bei Start | 160 | 55 | 120 | 180 |
| Permeatfluss (kg/m²/h) am Ende | 55 | 120 | 180 | 55 |
| Katalysatorkonzentration (Gew.-%) bei Start | 2 | 12 | 12 | 12 |
| Katalysatorkonzentration (Gew.-%) am Ende | 12 | 12 | 12 | 15 |

Im vierten Schritt zeigte sich, dass die Katalysatorsuspension bei einer Konzentration von ca. 15 Gew.-%, ohne Zugabe eines Hilfsstoffs nicht mehr stabil zu filtrierten war. D.h. die Dicke der Deckschicht auf der Membran nahm mit der Zeit zu und führte letztendlich zur kompletten Blockade der Membran.

Um den Einfluss des Hilfsstoffs darzulegen wurden das Retentat aus dem viertem Schritt mit dem in diesem Schritt abgetrennten Permeat wieder auf eine Konzentration von ca. 12 Gew.-% (Wert vor dem vierten Schritt) verdünnt und dann der Hilfsstoff Tamol® NH 7519 schrittweise, bis zu einer Konzentration von 48 g/kg Katalysator, zugegeben. Die Zugabe des Hilfsstoffs erfolgte unter stationären Bedingungen, d.h. das Permeat wurde wieder in den Pumpkreislauf zurückgeführt.

| g Hilfsstoff pro kg Katalysator | Permeatfluss [kg/m²/h] |
|---|---|
| 0,0 | 180 |
| 5 | 190 |
| 10 | 165 |
| 15 | 118 |
| 24 | 98 |
| 48 | 90 |
| Katalysatorgehalt = 11,6 % | |

Hierbei nahm der Permeatfluss zwar bis zu einer Zugabe von 48 g Hilfsstoff/kg Katalysator ab, im Gegenzug wurden die Eigenschaften der Katalysatorsuspension aber so verändert, dass bei einer erneut durchgeführter Konzentrierung die erreichbare Endkonzentration des Katalysators im Retentat ohne Blockade der Membran von ca. 15 Gew.-% auf fast 30 Gew.-% erhöht wurde.

Es zeigte sich auch hier, dass unterhalb einer Grenzkonzentration (in diesem Fall ca. 14 Gew.-%) der Zusatz von Hilfsstoff (Tamol® NH 7519) zu einer Verringerung des Permeatflusses, über dieser Grenzkonzentration aber zu deutlich höheren Permeatflüssen sowie zu einem problemloseren Betrieb der Membranfiltrationsanlage führt, wodurch deutlich höhere Katalysatorendkonzentrationen erreicht werden.

| Konzentrierung in H₂O (ohne Hilfsstoff) | | Konzentrierung in H₂O (4,8g Hilfsstoff/100g Katalysator) | |
|---|---|---|---|
| Kat-Gehalt | Fluss | Kat-Gehalt | Fluss |
| [%] | [kg/m²/h] | [%] | [kg/m²/h] |
| 11,6 | 178 | 11,6 | 71 |
| 12,7 | 120 | 19 | 55 |
| 13,5 | 90 | 24 | 40 |
| 14,9 | 55 | 28,9 | 35 |

## Patentansprüche

1. Verfahren zum Konditionieren und Ausschleusen von suspendierten Katalysatoren, **dadurch gekennzeichnet, dass** eine Teilmenge des Katalysatoren enthaltenden Reaktionsmediums aus einem oder mehreren Reaktoren kontinuierlich entnommen wird und die suspendierten, mindestens teilweise inaktivierten Katalysatoren mittels mindestens einer Membranfiltration abgetrennt und gereinigt werden, wobei mindestens eine der Membranfiltrationen als Diafiltration ausgeführt wird, wobei die inaktivierten Katalysatoren im Mittelwert mindestens 0,5% ihrer katalytischen Eigenschaften verloren haben, das Verfahren mindestens einen Konzentrationsschritt in Bezug auf die suspendierten Katalysatoren enthält, die Katalysatoren nach der letzten Membranfiltration in einem flüssigen Suspensionsmittel ausgewählt aus der Gruppe bestehend aus Alkohol, Keton, Ether, Nitril, Säureamid und Wasser vorliegen, durch die Durchführung einer oder mehrerer Diafiltrationsschritte ein Austausch des Suspensionsmittels erfolgt und die Katalysatoren aus einem oder mehreren kontinuierlich betriebenen Reaktoren entnommen werden.

2. Verfahren nach Anspruch 1, **dadurch gekennzeichnet, dass** mindestens ein Konzentrationsschritt vor der ersten Membranfiltration und mindestens ein Konzentrationsschritt nach der letzten Membranfiltration durchgeführt wird.

3. Verfahren nach Anspruch 1, **dadurch gekennzeichnet, dass** das Diafiltrationsmedium ohne Phasengrenze mischbar mit dem Suspensionsmedium ist.

4. Verfahren nach den Ansprüchen 1 bis 3, **dadurch gekennzeichnet, dass** die Katalysatorsuspension nach Durchführung des Verfahrens zur Konditionierung eine Konzentration an Verunreinigungen von weniger als 1 Gew.-%, bezogen auf die Suspension, aufweist.

5. Verfahren nach den Ansprüchen 1 bis 4, **dadurch gekennzeichnet, dass** mindestens eine Filtration in Gegenwart mindestens eines Tensides erfolgt.

6. Verfahren nach Anspruch 5, **dadurch gekennzeichnet, dass** 0,1 bis 50 Gew.-% Hilfsstoff, bezogen auf die Katalysatoren, verwendet wird.

7. Verfahren nach Anspruch 1 oder 5, **dadurch gekennzeichnet, dass** als Hilfsstoff ethoxylierte Fettalkohole, Polyethylenglycol-Polypropylenglycol-Blockpolymere, Carboxyl-, Sulfon-, Phosphonsäure- oder quarternäre Ammoniumgruppen tragende Verbindungen, Polycarbonsäuren, Polyvinylphosphonsäuren und/oder polymere Amine auf Basis von verseiftem Polyvinylformamid oder Ethylenimin verwendet werden.

8. Verfahren nach den Ansprüchen 1 bis 6, **dadurch gekennzeichnet, dass** die Katalysatoren nach Durchführung des Verfahrens zur Konditionierung in wässriger Lösung vorliegen.

9. Verfahren nach den Ansprüchen 1 bis 7, **dadurch gekennzeichnet, dass** die Katalysatoren zur Hydrierungen, Oxidationen, Isomerisierungen und/oder Hydroisomerisierungen verwendet wurden.

## Claims

1. A method of conditioning and discharging suspended catalysts, wherein part of the catalyst-comprising reaction medium is continuously taken from one or more reactors and the suspended, at least partially inactivated catalysts are separated off and purified by means of at least one membrane filtration, with at least one of the membrane filtrations being carried out as a diafiltration, with the inactivated catalysts having, on average, lost at least 0.5% of their catalytic properties, the method comprises at least one concentration step with regard to the suspended catalysts, the catalysts are present in a liquid suspension medium selected from the group consisting of alcohol, ketone, ether, nitrile, acid amide and water after the last membrane filtration, an exchange of the suspension medium is effected by carrying out one or more diafiltration steps and the catalysts are taken from one or more continuously operated reactors.

2. The method according to claim 1, wherein at least one concentration step is carried out before the first membrane filtration and at least one concentration step is carried out after the last membrane filtration.

3. The method according to claim 1, wherein the diafiltration medium is miscible without a phase boundary with the suspension medium.

4. The method according to any of claims 1 to 3, wherein the catalyst suspension after the conditioning method has been carried out has a concentration of impurities of less than 1% by weight, based on the suspension.

5. The method according to any of claims 1 to 4, wherein at least one filtration is carried out in the presence of at least one surfactant.

6. The method according to claim 5, wherein from 0.1 to 50% by weight of auxiliary, based on the catalysts, is used.

7. The method according to claim 1 or 5, wherein ethoxylated fatty alcohols, polyethylene glycol-polypropylene glycol block polymers, compounds bearing carboxyl groups, sulfonic acid groups, phosphonic acid groups or quaternary ammonium groups, polycarboxylic acids, polyvinylphosphonic acids and/or polymeric amines based on hydrolyzed polyvinylformamide or ethylenimine are used as auxiliary.

8. The method according to any of claims 1 to 6, wherein the catalysts are present in aqueous solution after the conditioning method has been carried out.

9. The method according to any of claims 1 to 7, wherein the catalysts have been used for hydrogenations, oxidations, isomerizations and/or hydroisomerizations.

## Revendications

1. Procédé de conditionnement et d'évacuation de catalyseurs suspendus, **caractérisé en ce qu'**une partie du milieu réactionnel contenant des catalyseurs est soutirée en continu d'un ou de plusieurs réacteurs, et les catalyseurs suspendus, au moins partiellement inactivés, sont séparés et purifiés au moyen d'au moins une filtration sur membrane, au moins une des filtrations sur membrane étant configurée sous la forme d'une diafiltration, les catalyseurs inactivés ayant perdu en moyenne au moins 0,5 % de leurs propriétés catalytiques, le procédé contenant au moins une étape de concentration concernant les catalyseurs suspendus, les catalyseurs se présentant après la dernière filtration sur membrane dans un agent de suspension liquide choisi dans le groupe constitué par un alcool, une cétone, un éther, un nitrile, un amide d'acide et de l'eau, un échange de l'agent de suspension ayant lieu par la réalisation d'une ou de plusieurs étapes de diafiltration, et les catalyseurs étant soutirés d'un ou de plusieurs réacteurs exploités en continu.

2. Procédé selon la revendication 1, **caractérisé en ce qu'**au moins une étape de concentration est réalisée avant la première filtration sur membrane et au moins une étape de concentration est réalisée après la dernière filtration sur membrane.

3. Procédé selon la revendication 1, **caractérisé en ce que** l'agent de diafiltration est miscible sans limite de phases avec l'agent de suspension.

4. Procédé selon les revendications 1 à 3, **caractérisé en ce que** la suspension de catalyseurs présente après la réalisation du procédé de conditionnement une concentration en impuretés inférieure à 1 % en poids, par rapport à la suspension.

5. Procédé selon les revendications 1 à 4, **caractérisé en ce qu'**au moins une filtration a lieu en présence d'au moins un tensioactif.

6. Procédé selon la revendication 5, **caractérisé en ce que** 0,1 à 50 % en poids d'adjuvant, par rapport aux catalyseurs, est utilisé.

7. Procédé selon la revendications 1 ou 5, **caractérisé en ce que** des alcools gras éthoxylés, des polymères séquencés de polyéthylène glycol-polypropylène glycol, des composés portant des groupes carboxyle, sulfone, acide phosphonique ou ammonium quaternaire, des acides polycarboxyliques, des acides polyvinylphosphoniques et/ou des amines polymères à base de polyvinylformamide saponifié ou d'éthylène-imine sont utilisés en tant qu'adjuvant.

8. Procédé selon les revendications 1 à 6, **caractérisé en ce que** les catalyseurs se présentent dans une solution aqueuse après la réalisation du procédé de conditionnement.

9. Procédé selon les revendications 1 à 7, **caractérisé en ce que** les catalyseurs ont été utilisés pour des hydrogénations, des oxydations, des isomérisations et/ou des hydroisomérisations.
